# EUROPEAN PATENT SPECIFICATION

(11) **EP 2 731 403 B1**
(45) Date of publication and mention of the grant of the patent: **11.09.2019**
(21) Application number: 12811793.4
(22) Date of filing: 15.06.2012
(51) Int. Cl.: H05B 6/06, H05B 6/12

(54) **INDUCTION-HEATING COOKER AND PROGRAM THEREFOR**
KOCHGERÄT FÜR INDUKTIONSERHITZUNG UND PROGRAMM DAFÜR
CUISINIÈRE À INDUCTION ET PROGRAMME ASSOCIÉ

(30) Priority: 08.07.2011 JP 2011151363
(43) Date of publication of application: 14.05.2014
(73) Proprietor: Mitsubishi Electric Corporation, Tokyo 100-8310 (JP); Mitsubishi Electric Home Appliance Co., Ltd., Fukaya-shi, Saitama 369-1295 (JP)
(72) Inventor: NINAGAWA, Hiromi, Saitama 369-1295 (JP); KAWATA, Yukio, Saitama 369-1295 (JP); KAMEOKA, Kazuhiro, Saitama 369-1295 (JP)
(74) Representative: Pfenning, Meinig & Partner mbB
(86) International application number: PCT/JP2012/003931
(87) International publication number: WO 2013/008390

(56) References cited:
- EP-A1- 2 247 158
- EP-A1- 2 317 824
- WO-A1-2010/101135
- WO-A1-2010/101202
- JP-A- 2008 269 885
- JP-A- 2008 269 885
- JP-A- 2009 158 225
- JP-A- 2009 158 225
- JP-A- 2010 212 100
- JP-A- 2010 218 863

## Description

### Technical Field

The present invention relates to an induction heating cooker that heats a target object, such as a metal pot, containing an object to be cooked, from below the target object, and to a program for executing the control for the induction heating cooker.

### Background Art

In recent years, induction heating cookers that induction-heat a target object, such as a metal pot, by a heating coil, excellent features of being safe, clean, and high-efficiency have been acknowledged by consumers, and the use of induction heating cookers has rapidly become widespread.

Such induction heating cookers are broadly categorized according to the form of installation into a stationary type, which is placed on the upper surface of a kitchen sink or the like and is used, and a built-in (embedded) type, which is set in an installation space of kitchen furniture such as a sink. Almost the entire upper surface of either type of induction heating cookers is covered with a top plate (may also be called a top panel) formed of a heat-resistant glass plate or the like, and one or more induction heat sources are arranged below the top plate. As induction heat sources, a plurality of heating coils having different diameters arranged concentric to one another and on substantially the same plane and high-frequency generation power circuits (may also be called inverter circuits) that supply high-frequency electric power to the individual heating coils are used (for example, see Patent Literature 1). With such a configuration, since output control of high-frequency electric power for a plurality of heating coils having different diameters can be individually performed, various heating patterns can be formed.

Furthermore, induction heating cookers of a different type in which a circular heating coil is arranged at the center thereof and a plurality of side heating coils are arranged so as to be adjacent to both sides of the central heating coil so that the central heating coil and the side heating coils can be driven by different high-frequency generation power circuits have been available. With such an induction heating cooker, the direction of high-frequency currents flowing to the plurality of side heating coils and the central heating coil is taken into consideration, the induced electromotive force generated in the side heating coils and the induced electromotive force generated in the central heating coil can cancel out each other. Thus, the above-mentioned induction heating cooker can be applied to simultaneous heating of a wide planar area and the like (for example, see Patent Literature 2).

Furthermore, as induction heating cookers of a different type, in order to provide an induction heating cooker that does not cause a deviation in the heating distribution at the time of heating a large pot whose bottom face has a size greater than the outer diameter of a heating coil and that performs heating without degrading the cooking performance, an induction heating cooker including a first heating coil, a plurality of heating coils that are arranged in the vicinity of the first heating coil, that have the minimum outer diameter smaller than the minimum outer diameter of the first heating coil, and that are not concentric to the first heating coil, and a control unit that controls output of a first inverter circuit for driving the first heating coil and output of a second inverter circuit for driving the plurality of heating coils (for example, see Patent Literature 3) has been proposed.

Furthermore, induction heating cookers of a different type including a plurality of circular heating coils that are arranged on substantially the same plane below a top plate and that are not concentric to one another, inverter circuits that supply induction heating power to the plurality of heating coils, a control unit that controls output of the inverter circuits, and an operation unit that instructs the control unit to start or stop heating, set heating power, and the like has been available. In this induction heating cooker, in accordance with an instruction from the operation unit, induction heating power to be supplied to more than half but not all of the plurality of heating coils and not to be supplied to the rest of the heating coils, thereby the control unit causes a convection to be generated in the object to be cooked inside the target object (for example, see Patent Literature 4).

Similarly, in order to cause a convection to be generated in an object to be cooked, a device including a plurality of circular heating coils that are arranged on substantially the same plane below a top plate and that are not concentric to one another has been available. In the device, it is controlled such that the amount of induction heating power supplied to more than half but not all of the plurality of heating coils is greater than the amount of induction heating power to be supplied to the rest of the heating coils (for example, see Patent Literature 5). EP 2 317 824 A1 describes an induction cooking top comprising a plurality of nonoverlapping inductors arranged along concentric circumferences wherein the size of said inductors follows a decreasing one monotonic law as the distance from the center of said circumferences increases.

### Citation List

### Patent Literature

Patent Literature 1: Japanese Patent No. 2978069 (Pages 1 and 2, Fig. 1)
Patent Literature 2: Japanese Patent No. 3725249 (Pages 1 and 2, Fig. 3)
Patent Literature 3: Japanese Unexamined Patent Application Publication No. 2010-73384 (Pages 2 and 7, Fig. 3)
Patent Literature 4: Japanese Unexamined Patent Application Publication No. 2010-165656 (Pages 1 and 2, Figs. 1 and 2)
Patent Literature 5: Japanese Unexamined Patent Application Publication No. 2010-146882 (Pages 1 and 2, Figs. 1 and 2)

### Summary of Invention

### Technical Problem

However, since existing devices heat the entire bottom face of a target object, such as a metal pot, using a plurality of circular coils or using a circular coil (central coil) and (non-circular) side coils at the same time, a convection having a long convection path that extends from one side of the pot toward the facing other side of the pot cannot be sufficiently generated. Furthermore, there is a problem in which when a plurality of coils are heated in the case of simmering for a long time, the bottom of the pot is likely to be burned. Even domestic induction heating cookers provide various cooking menus desired by users, such as quickly boiling water, keeping food being boiled at high temperature or at a specific temperature (also called "keeping warm"), or rapidly heating a frying pan to a specific temperature while making the entire frying pan have a uniform temperature, increasing the temperature at the outer circumferential edge of the frying pan, that is, a so-called temperature of an edge of the pan, to a desired level (called "preheating"), and then putting cooking ingredients, such as meat, vegetables, or the like, into the frying pan. There is a problem in which users cannot easily or automatically select a driving pattern for heating coils suitable for a cooking menu.

The present invention has been designed in view of the above-mentioned problems. It is a main object of the present invention to attain an induction heating cooker having at least two operation modes, a preheating operation mode and a boiling mode, and a program for the induction heating cooker.

### Solution to Problem

An induction heating cooker according to a first invention includes:
a heating coil that induction-heats a target object;
high-frequency electric power supplying means for driving the heating coil;
conduction control means for controlling the high-frequency electric power supplying means and having at least a "water-boiling mode" and a "boiling mode" as a cooking mode that is selectable by a user;
temperature detection means for detecting temperature of the target object; and
an operation unit that instructs the conduction control means to perform the cooking mode,
wherein the heating coil includes a ring-shaped main heating coil and a plurality of sub-heating coils that are arranged around the main heating coil and that heat, in cooperation with the main heating coil, a target object having a diameter that is greater than a target object having a diameter that is capable of being heated by the main heating coil,
wherein in a case where the target object is heated in the "water-boiling mode", the conduction control means is capable of automatically determining heating only by the main heating coil or heating by the main heating coil and the sub-heating coils in cooperation with each other, and
wherein in a case where the target object is heated in the "boiling mode" by the main heating coil and the sub-heating coils in cooperation with each other, the conduction control means drives the main heating coil and the sub-heating coils at the same time at a stage before the temperature detection means detects that fluid in the target object is in a boiling state, and drives the main heating coil and the sub-heating coils at specific time intervals at a stage after the temperature detection means detects that the fluid in the target object is in the boiling state. With this configuration, a convection of fluid or fluid containing an ingredient such as a vegetable, meat, or the like in a vessel being heated such as a pot in the boiling mode can be accelerated, and occurrence of burning at the bottom of the pot can also be suppressed.

An induction heating cooker according to a second invention includes:
a heating coil that induction-heats a target object;
high-frequency electric power supplying means for driving the heating coil;
conduction control means for controlling the high-frequency electric power supplying means and having at least a "water-boiling mode" and a "boiling mode" as a cooking mode that is selectable by a user;
temperature detection means for detecting temperature of the target object; and
an operation unit that instructs the conduction control means to perform the cooking mode,
wherein the heating coil includes a ring-shaped main heating coil and a plurality of sub-heating coils that are arranged around the main heating coil and that heat, in cooperation with the main heating coil, a target object having a diameter that is greater than the target object having a diameter that is capable of being heated by the main heating coil,
wherein the sub-heating coils face an outer circumferential edge of the main heating coil with a specific electrically insulated space therebetween, the entire sub-heating coils curve toward the main heating coil so as to be along the outer circumferential edge of the main heating coil, each of the sub-heating coils has a flat shape, and a consistency ratio of the curvatures is 60% or more,
wherein in a case where the target object is heated in the "water-boiling mode", the conduction control means is capable of automatically determining heating only by the main heating coil or heating by the main heating coil and the sub-heating coils in cooperation with each other, and
wherein in a case where the target object is heated in the "boiling mode" by the main heating coil and the sub-heating coils in cooperation with each other, the conduction control means drives the main heating coil and the sub-heating coils at the same time at a stage before the temperature detection means detects that fluid in the target object is in a boiling state, and drives the main heating coil and the sub-heating coils at specific time intervals at a stage after the temperature detection means detects that the fluid in the target object is in the boiling state. With this configuration, a convection of fluid or fluid containing an ingredient such as a vegetable, meat, or the like in a vessel being heated such as a pot in the boiling mode can be accelerated, and occurrence of burning at the bottom of the pot can also be suppressed. Furthermore, since the sub-heating coils face the outer circumferential edge of the main heating coil with the specific electrically insulated space therebetween, the entire sub-heating coils curve toward the main heating coil so as to be along the outer circumferential edge of the main heating coil, each of the sub-heating coils has a flat shape, and the consistency ratio of the curvatures is 60% or more, a heating area by the sub-heating coils is generated so as to surround the main heating coil, and the target object can be efficiently heated by the sub-heating coils together with the main heating coil.

An induction heating cooker according to a third invention includes:
a ring-shaped main heating coil that induction-heats a target object;
a plurality of sub-heating coils that are arranged around the main heating coil and that heat, in cooperation with the main heating coil, a target object having a diameter that is greater than the target object having a diameter that is capable of being heated by the main heating coil;
high-frequency electric power supplying means for driving the main heating coil and the sub-heating coils;
conduction control means for controlling the high-frequency electric power supplying means and having at least a "water-boiling mode" and a "preheating mode" as a cooking mode that is selectable by a user;
temperature detection means for detecting temperature of the target object; and
an operation unit that instructs the conduction control means to perform the cooking mode,
wherein in a case where induction heating is performed in the "water-boiling mode", the conduction control means is capable of automatically determining heating only by the main heating coil or heating by the main heating coil and the sub-heating coils in cooperation with each other, and
wherein in a case where induction heating is performed in the "preheating mode" by the main heating coil and the sub-heating coils in cooperation with each other, the conduction control means drives the main heating coil and the sub-heating coils at the same time at a specific first heating power at a stage before the temperature detection means detects that the temperature of the target object is a first preheating temperature, and drives the main heating coil and the sub-heating coils at specific time intervals at a heating power that is smaller than or equal to a second heating power, which is smaller than the first heating power, at a stage after the temperature detection means detects that the temperature of the target object is a second preheating temperature, which is higher than the first preheating temperature. With this configuration, since heating can be performed at a large heating power until the first preheating temperature is reached, the preheating time can be shortened and the preheating operation can be automated. Furthermore, after the second temperature is reached, in a preheating step after the second preheating temperature is reached, by alternately driving the main heating coil and the plurality of sub-heating coils at specific time intervals or driving the main heating coil and the plurality of sub-heating coils at the same time at a specific main/sub heating power ratio, the entire target object from the center of the bottom to the outer circumferential edge of the target object can be evenly heated.

An induction heating cooker according to a fourth invention includes:
a ring-shaped main heating coil that induction-heats a target object;
a plurality of sub-heating coils that are arranged around the main heating coil and that heat, in cooperation with the main heating coil, a target object having a diameter that is greater than the target object having a diameter that is capable of being heated by the main heating coil;
high-frequency electric power supplying means for driving the main heating coil and the sub-heating coils;
conduction control means for controlling the high-frequency electric power supplying means and having at least a "water-boiling mode" and a "preheating mode" as a cooking mode that is selectable by a user;
temperature detection means for detecting temperature of the target object; and
an operation unit that instructs the conduction control means to perform the cooking mode,
wherein in a case where induction heating is performed in the "water-boiling mode", the conduction control means is capable of automatically determining heating only by the main heating coil or heating by the main heating coil and the sub-heating coils in cooperation with each other,
wherein in a case where induction heating is performed in the "preheating mode" by the main heating coil and the sub-heating coils in cooperation with each other, the conduction control means drives the main heating coil and the sub-heating coils at the same time at a specific first heating power at a stage before the temperature detection means detects that the temperature of the target object is a first preheating temperature, and drives the main heating coil and the sub-heating coils at specific time intervals at a heating power that is smaller than or equal to a second heating power, which is smaller than the first heating power, at a stage after the temperature detection means detects that the temperature of the target object is a second preheating temperature, which is higher than the first preheating temperature, and
wherein in a case where the temperature detection means detects that the temperature of the target object has decreased to the first preheating temperature or below at the stage after the second preheating temperature is detected, the conduction control device recovers the second heating power from the first heating power and performs heating at a high heating power by the main heating coil MC and the sub-heating coils so that the second preheating temperature is rapidly recovered. With this configuration, since heating can be performed at a large heating power until the first preheating temperature is reached, the preheating time can be shortened, and the preheating operation can also be automated. Furthermore, after the second temperature is reached, in a preheating step after the second preheating temperature is reached, by alternately driving the main heating coil and the plurality of sub-heating coils at specific time intervals or driving the main heating coil and the plurality of sub-heating coils at the same time at a specific main/sub heating power ratio, the entire target object from the center of the bottom to the outer circumferential edge of the target object can be heated more evenly. Furthermore, in the case where the temperature of the target object suddenly decreases due to input of an ingredient such as a cool vegetable or meat, since the conduction control device rapidly recovers the first heating power from the second heating power and heating is performed at a high heating power by the main heating coil and the sub-heating coils, a necessary heating power can be automatically maintained even when the preheating mode is used, and stir-fry or fry can be performed in an excellent manner.

According to a fifth invention, a computer program for causing the induction heating cooker of the first to fourth inventions to operate is provided.

### Advantageous Effects of Invention

According to the present invention, a heating operation for a target object is performed by a main heating coil and at least one sub-heating coil provided on a side of the main heating coil, and heating can be performed at a large heating power until a first preheating temperature is reached. Thus, the preheating time can be shortened, and the preheating operation can be automated. Therefore, an induction heating cooker of a type in which heating is performed by a plurality of heating coils in cooperation with each other and whose usability is improved or a control program for the induction heating cooker can be obtained.

### Brief Description of Drawings

Fig. 1 is a block diagram illustrating a basic configuration of the entire induction heating cooker of a built-in type according to Embodiment 1 of the present invention.
Fig. 2 is a plan view of the state in which a top panel of the induction heating cooker of the built-in type according to Embodiment 1 of the invention is removed.
Fig. 3 includes plan views of an induction heating coil in the induction heating cooker of the built-in type according to Embodiment 1 of the invention.
Fig. 4 is a plan view of a left induction heating coil in the induction heating cooker of the built-in type according to Embodiment 1 of the invention.
Fig. 5 includes plan views of the left induction heating coil in the induction heating cooker of the built-in type according to Embodiment 1 of the invention.
Fig. 6 is a main heating coil explanatory diagram of the left induction heating coil in the induction heating cooker of the built-in type according to Embodiment 1 of the invention.
Fig. 7 is a schematic diagram of a right induction heating coil and a driving circuit for the right induction heating coil in the induction heating cooker of the built-in type according to Embodiment 1 of the invention.
Fig. 8 is a control step explanatory diagram illustrating a basic heating operation of the entire induction heating cooker of the built-in type according to Embodiment 1 of the invention.
Fig. 9 is a heating operation explanatory diagram 1 for the left induction heating coil in the induction heating cooker of the built-in type according to Embodiment 1 of the invention.
Fig. 10 is a conduction explanatory diagram 1 of the left induction heating coil in the induction heating cooker of the built-in type according to Embodiment 1 of the invention.
Fig. 11 is a plan view illustrating a variation of the left induction heating coil in the induction heating cooker of the built-in type according to Embodiment 1 of the invention.
Fig. 12 is a heating operation diagram 2 for the left induction heating coil in the induction heating cooker of the built-in type according to Embodiment 1 of the invention.
Fig. 13 is a conduction explanatory diagram 2 for the left induction heating coil in the induction heating cooker of the built-in type according to Embodiment 1 of the invention.
Fig. 14 is a heating operation explanatory diagram 3 for the left induction heating coil in the induction heating cooker of the built-in type according to Embodiment 1 of the invention.
Fig. 15 is a conduction explanatory diagram 3 for the left induction heating coil in the induction heating cooker of the built-in type according to Embodiment 1 of the invention.
Fig. 16 is a conduction explanatory diagram 4 for the left induction heating coil in the induction heating cooker of the built-in type according to Embodiment 1 of the invention.
Fig. 17 is a heating operation explanatory diagram 4 for the left induction heating coil in the induction heating cooker of the built-in type according to Embodiment 1 of the invention.
Fig. 18 is a conduction explanatory diagram 5 for the left induction heating coil in the induction heating cooker of the built-in type according to Embodiment 1 of the invention.
Fig. 19 is a conduction explanatory diagram 6 for the left induction heating coil in the induction heating cooker of the built-in type according to Embodiment 1 of the invention.
Fig. 20 is a conduction explanatory diagram 7 for the left induction heating coil in the induction heating cooker of the built-in type according to Embodiment 1 of the invention.
Fig. 21 is a conduction explanatory diagram 8 for the left induction heating coil in the induction heating cooker of the built-in type according to Embodiment 1 of the invention.
Fig. 22 is a conduction explanatory diagram 9 for the left induction heating coil in the induction heating cooker of the built-in type according to Embodiment 1 of the invention.
Fig. 23 is a plan view 1 illustrating part of a display unit and an operation unit of the induction heating cooker of the built-in type according to Embodiment 1 of the invention.
Fig. 24 is a plan view 2 illustrating part of the display unit and the operation unit of the induction heating cooker of the built-in type according to Embodiment 1 of the invention.
Fig. 25 is a plan view 3 illustrating part of the display unit and the operation unit of the induction heating cooker of the built-in type according to Embodiment 1 of the invention.
Fig. 26 is a flowchart 1 of a program illustrating operation from start of the induction heating cooker of the built-in type according to Embodiment 1 of the invention to a control operation in a boiling mode.
Fig. 27 is a flowchart 1 of a program illustrating a control operation in the boiling mode in the induction heating cooker of the built-in type according to Embodiment 1 of the invention.
Fig. 28 is a flowchart 2 of a program illustrating a cooking operation in a boiling mode in the induction heating cooker of the built-in type according to Embodiment 1 of the invention.
Fig. 29 is a flowchart 3 of a program illustrating a cooking operation in a preheating mode in the induction heating cooker of the built-in type according to Embodiment 1 of the invention.

### Description of Embodiments

### Embodiment 1.

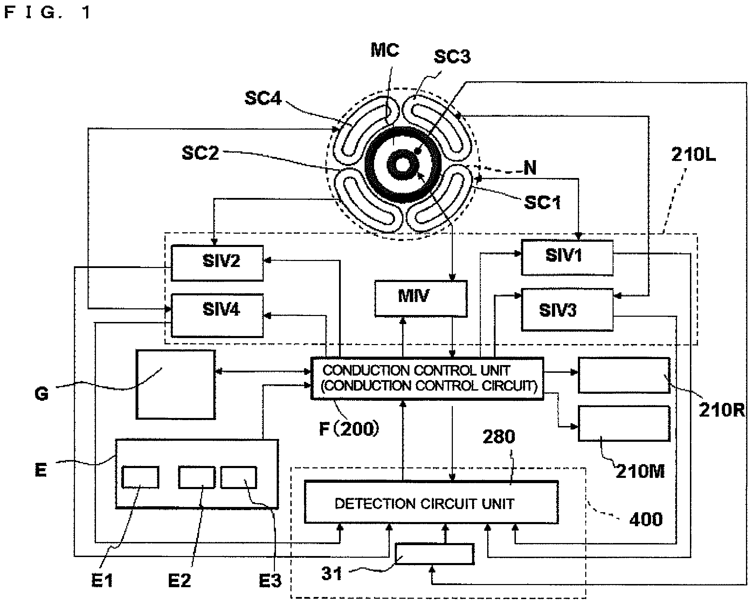

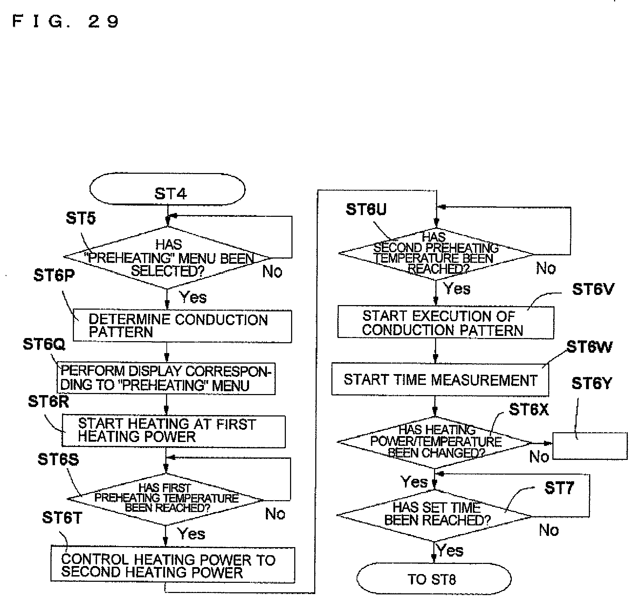

Figs. 1 to 29 illustrate an induction heating cooker according to Embodiment 1 of the present invention and a program for the induction heating cooker. An example of the induction heating cooker of a built-in (embedded) type is illustrated in Figs. 1 to 29. The same portions or corresponding portions in Figs. 1 to 29 are referred to with the same reference signs.

Terms used in embodiments of the invention will be defined below.

"Operation conditions" for heating means D (heat sources including a first induction heating unit 6L, a second induction heating unit 6R, and the like (described later)) represent electrical or physical conditions for heating. The conduction time, conduction amount (heating power), heating temperature, conduction pattern (consecutive conduction, intermittent conduction, etc.) are generically called "operation conditions." That is, conduction conditions for the heating means D are called "operation conditions."

"Display" represents an operation for visually informing a user of operation conditions for a cooker and relevant information to be used for the reference of cooking (including information for warning abnormal use or for reporting the occurrence of an abnormal operation state, hereinafter, simply referred to as "cooking relevant information") by characters, signs, illustrations, color, presence or absence of light emission, changes in light emission intensity, or the like. In addition, although "light emission" and "lighting" have the same meaning, "light emission" often represents the state in which a light-emitting element, such as a light-emitting diode, emits light and "lighting" often represents the state in which a lamp emits light. In the following description, "light emission" and "lighting" may be used together. In the case where only light that is too weak to be viewed by a user reaches the user even if light emission or lighting is electrically or physically achieved, since the user cannot acquire the result of "light emission" or "lighting", this case does not correspond to "light emission" or "lighting" unless particularly stated. For example, in general, a top plate, which will be described later, is not water-clear but its material has a tint color before painting or the like is performed on the surface thereof. Since the transmittance of visible light is not 100%, for example, a situation occurs in which light emitted from a light-emitting diode cannot be viewed from above a top plate 21 (described later) when the light is weak.

"Display means" of a display unit includes a liquid crystal display (LCD), various light-emitting elements (examples of a semiconductor light-emitting element include two types, an LED (Light Emitting Diode) and an LD (laser diode)), unless particularly stated, an organic electroluminescence (Electro Luminescence: EL) element, and the like. Thus, the display means includes a display screen, such as a liquid crystal screen or an EL screen.

"Report" represents an operation for informing a user of operation conditions for control means and cooking relevant information, in order for the user to recognize the operation conditions and the cooking information, by display or electrical voice (electrically created or synthesized voice).

"Reporting means" includes reporting means based on audible tone, such as a buzzer or a speaker, and based on characters, signs, illustrations, animations, or visible light.

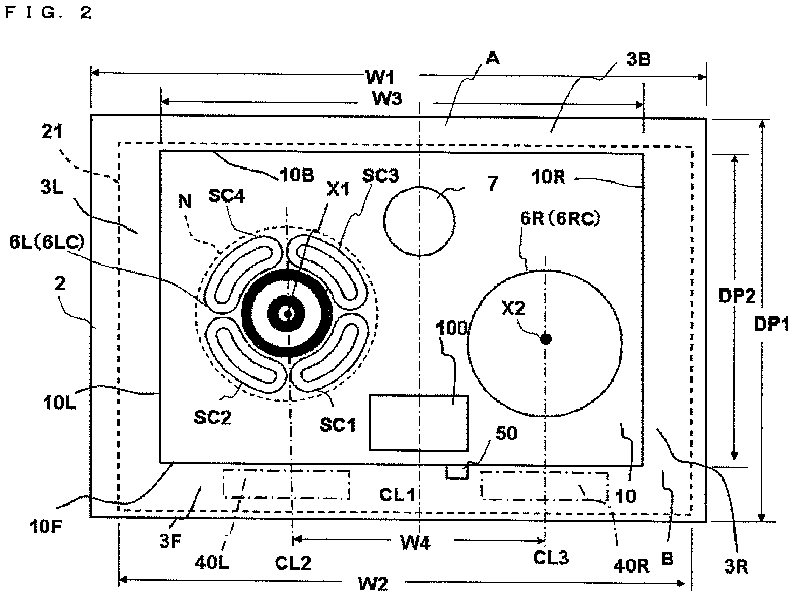

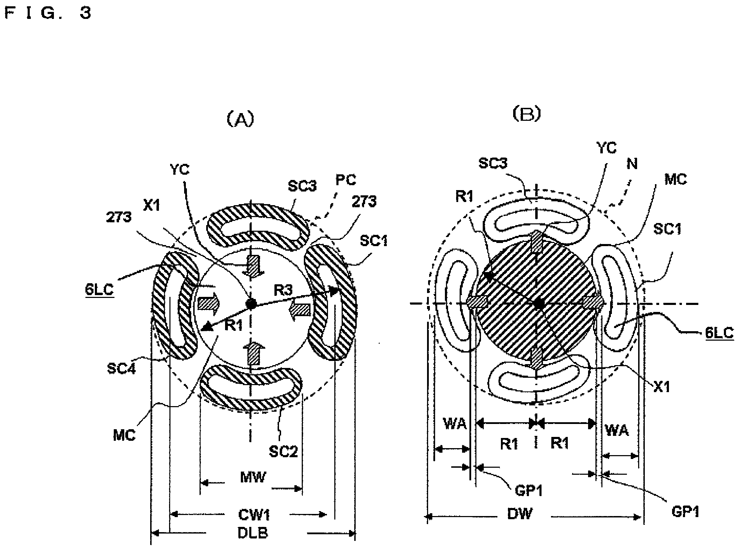

Hereinafter, an induction heating cooker according to Embodiment 1 of the invention will be explained in detail with reference to Figs. 1 to 29. Figs. 1 and 3 are plan views schematically illustrating the entire induction heating coil of an induction heating cooker according to the invention. Fig. 2 is a plan view illustrating the entire induction heating cooker according to the invention in a state in which a top panel is removed.

Referring to Figs. 1 to 3, the induction heating cooker according to the invention is a so-called three-burner induction heating cooker including the first induction heating unit 6L, the second induction heating unit 6R, and a radiation-type central electrical heating unit 7. The induction heating cooker includes a main unit A having a rectangular shape (may also be called a rectangular shape) in a plan view. The main unit A includes a top panel unit B that covers the entire upper surface of the main unit A with a horizontally arranged plate-like top plate 21, a casing unit C (not illustrated) defining the circumference (outline) other than the upper surface of the main unit A, heating means D for heating a pot, food, and the like using electric energy or the like, operation means E to be operated by a user, control means F for receiving a signal from the operation means and controlling the heating means, and display means G for displaying operation conditions for the heating means.

Furthermore, as part of the heating means D, electrically heating means that is called a grill chamber (grill heating chamber) or a roaster may be provided, although not used in Embodiment 1. Referring to Fig. 1, in the operation means E arranged in a front portion of the upper surface of the main unit A, E1 represents a first selection unit for which input operation is performed by a touch key for detecting presence or absence of input on the basis of an electrostatic capacitance change or a press-type key including a mechanical electrical contact. Similarly, E2 represents a second selection unit, and E3 represents a third selection unit. By performing operation for the selection units mentioned above, a user is able to select various cooking menus. Features of the functions of the selection units E1 to E3 will be explained in detail below.

The first induction heating unit 6L is arranged on the left side of a lateral center line CL1 of the main unit A, and the second induction heating unit 6R is arranged on the right side of the lateral center line CL1.

Reference numeral 100 represents a display screen of the display means G. The display screen 100 is, for example, a liquid crystal display screen, and is arranged in a lateral central part of the main unit A so as to be stretched over the lateral center line CL1.

As illustrated in Fig. 2, the main unit A is formed in substantially a square shape in such a manner that the outer shape of the main unit A corresponds to the size that covers the installation place formed on a kitchen furniture (not illustrated), such as a sink or the like and the space.

An upper portion of a main unit case 2 made from a metallic thin plate defining the outline of the main unit A is designed in a box shape having a width W3 of 540 mm (or 550 mm) and a depth DP2 of 402 mm in terms of inner dimensions. The first induction heating unit 6L, the second induction heating unit 6R, and the radiation-type central electrical heating unit 7 are arranged inside the main unit case. The first and second induction heating units 6L and 6R include disk-like wound heating coils 6LC and 6RC, respectively.

As illustrated in Fig. 2, flanges formed by being integrally bent outward in L shapes are provided at four positions, a back end, a front end, a right end, and a left end of an opening of the upper surface of the main unit case 2. A back flange 3B, a left flange 3L, a right flange 3R, and a front flange 3F are placed on the upper surface of the installation part of the kitchen furniture, so that the load of the heating cooker can be supported.

A magnetic target object N, such as a pot made from metal, (hereinafter, may be simply referred to as a "vessel to be heated" or a "pot") is placed on the top plate 21, and induction heating is performed by the first induction heating unit 6L, the second induction heating unit 6R, and the radiation-type central electrical heating unit 7 arranged below the top plate 21. The radiation-type central electrical heating unit 7 is also capable of heating a target object N that is not made from metal.

The top plate 21 has a rectangular shape, as expressed by a broken line in Fig. 2. A heat-resistant tempered glass plate forming the top plate 21 has a width W2 of 728 mm and a depth greater than the depth DP2, as illustrated in Fig. 2. Referring to Fig. 2, W1 represents the (maximum) width of the main unit case 2 forming the main unit A. A rectangular space having a width W3 and a depth DP2, which is below the top plate 21, is defined as a component storage room 10. The component storage room 10 has a front wall 10F, a right wall 10R, a left wall 10L, and a back (rear) wall 10B.

The radiation-type central electrical heating unit 7 is arranged on the lateral center line CL1 of the main unit A and in a position near a back portion of the lateral center line CL1. An electric heater of a type that performs heating by radiation (for example, nichrome wire, a halogen heater, a radiant heater, or the like) is used as the radiation-type central electrical heating unit 7. The radiation-type central electrical heating unit 7 heats the target object N, such as a pot, from below and through the top plate 21.

Referring to Figs. 1 to 3, MC represents a main heating coil of the first induction heating unit 6L and is arranged below and in the vicinity of the top plate 21 on which the target object N is placed. In Fig. 2, a broken line circle represents the outer shape (outline) of the target object N, such as a pot.

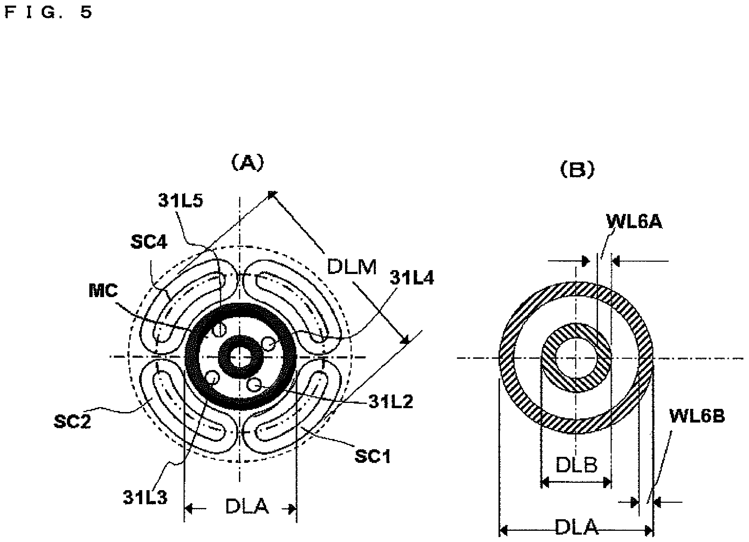

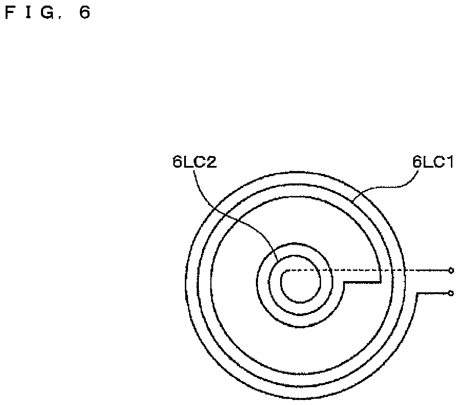

Furthermore, the main heating coil MC is formed to consequently have a disk shape by bundling up 30 thin wires each having a size of 0.1 mm to 0.3 mm to form a spiral shape, winding the bundle (hereinafter, referred to as a collective line) while one or more wires being twisted so that the outer shape is made round based on a midpoint X1. The diameter (the maximum outer diameter) of the main heating coil MC is about 180 mm to 200 mm (hereinafter, unified to 180 mm) and the radius R1 of the main heating coil MC is 90 mm, which is half the diameter. In Embodiment 1, for example, a capacity with the rated maximum power consumption (maximum heating power) of 2000 W is provided. As illustrated in Figs. 5(B) and 6, the main heating coil includes an outer heating coil 6LC1 and an inner heating coil 6LC2 that is connected in series to the outer heating coil 6LC1. Referring to Fig. 5(B), WL6A represents the coil width (width) of the inner heating coil 6LC2 and is about 10 mm, and WL6B represents the coil width (width) of the outer heating coil 6LC1 and is about 10 mm. Furthermore, DLA represents the outer diameter of the outer heating coil 6LC2 of the main heating coil MC and is 180 mm, which is twice the radius R1, and DLB represents the outer diameter of the inner heating coil 6LC2 of the main heating coil MC and is 90 mm.

SC1 to SC4 represent four elliptical sub-heating coils and are symmetrically arranged at front and back, and left and right around the midpoint X1 of the main heating coil MC at regular intervals. The transverse dimension, that is, the thickness (may also be called "width") WA, when radially viewed from the midpoint X1 is about 50% to 30% of the radius R1 of the main heating coil MC, and the sub-heating coils for which WA is set to 40 mm are used in the examples of Figs. 1 to 3. Furthermore, the length MW is about 180 mm, which is twice the radius R1, that is, the same as the diameter (the maximum outer diameter) of the main heating coil MC. Here, in the case illustrated in Fig. 2, when no contradiction with respect to other explanations occurs, a "side" of the main heating coil MC represents an upper side or a lower side (front side) as well as a right side or a left side, and "both sides" represent front and back or diagonal sides as well as left and right sides.

The four sub-heating coils SC1 to SC4 are fixed (on a heat-resistant plastic supporting body, which is generally called a "coil base") with a space 271, which is a specific space (a size of several mm to 10 mm, an example of "5 mm" will be explained below), therebetween on the outer peripheral surface of the main heating coil MC. The sub-heating coils SC1 to SC4 are arranged at substantially the same intervals (spaces 273) therebetween. The sub-heating coils SC1 to SC4 are each formed by winding a collective line while one or more wires being twisted, winding the collective line in a specific direction in such a manner that the outer shape is made to be elliptical or oval, and then partially tying the collective line up with a binder so that the shape is maintained or fixing the entire collective line with a heat-resistant resin or the like. The four sub-heating coils SC1 to SC4 have the same planar shape, and all the longitudinal, lateral, and vertical (thickness) dimensions are the same among the four sub-heating coils SC1 to SC4. Thus, four sub-heating coils are manufactured, and they are arranged at corresponding positions.

As illustrated in Fig. 3, around the main heating coil MC having the radius R1 from the midpoint X1, the tangential direction of the main heating coil MC corresponds to the center line in the longitudinal direction of each of the sub-heating coils SC1 to SC4. In other words, the tangential direction of the main heating coil MC corresponds to the longitudinal direction.

The sub-heating coils SC1 to SC4 each extend while a collective line curving to form an elliptical shape and are each configured to be one electrically closed circuit. The vertical dimension (also called height dimension or thickness) of the main heating coil MC and the vertical dimension of each of the sub-heating coils SC1 to SC4 are the same. Furthermore, the sub-heating coils SC1 to SC4 are horizontally arranged and fixed in such a manner that the facing intervals between the upper surfaces of the sub-heating coils SC1 to SC4 and the lower surface of the top plate are the same.

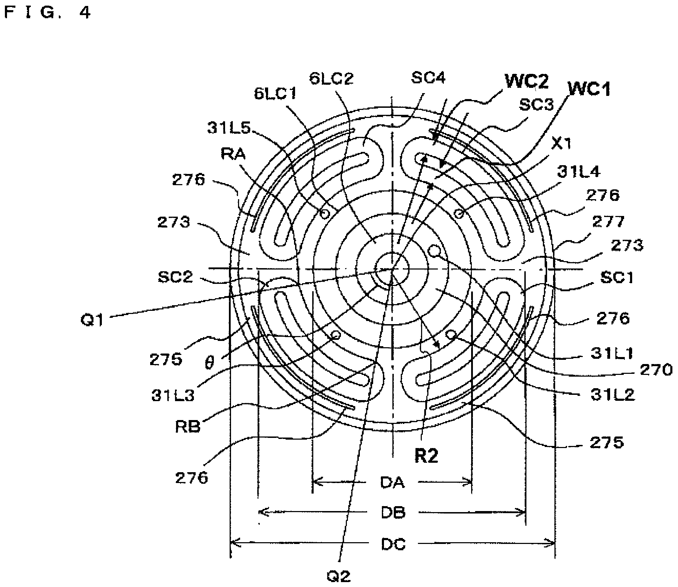

As described above, the four sub-heating coils SC1 to SC4 are arranged on the circle having the radius R2 from the midpoint X1 with the spaces 273 having a specific size therebetween, as illustrated in Fig. 4, and the circumference line of the radius R2 corresponds to the center line in the longitudinal direction of each of the sub-heating coils SC1 to SC4. In other words, the four sub-heating coils SC1 to SC4 are arranged along the arc of the specific radius R1 from the midpoint X1 of the main heating coil MC around the main heating coil MC having a ring shape and configuring a closed circuit, and each of the collective lines extends while curving at a radius of curvatures along the arc to configure an electrically closed circuit.

A straight line Q1, which reaches the midpoint X1 illustrated in Fig. 4, is a straight line that connects an inner curved edge of each of the four sub-heating coils SC1 to SC4, that is, one end RA of the curved arc (that is, a start point) to the midpoint X1. Similarly, a straight line Q2 is a straight line that connects the other end RB of the arc (that is, an end point) of each of the sub-heating coils SC1 to SC4 to the midpoint X1.

In terms of heating efficiency, it is desirable that the length between the end RA and the end RB (between the start point and the end point), that is, the length of the curved arc (of the sub-heating coil SC) at the radius R2 along the outer peripheral surface of the main heating coil MC, is large. This is because, as described below, it is devised such that high-frequency current flows in the same direction between the outer circumferential edge of the main heating coil MC and each of the sub-heating coils SC1 to SC4, and magnetic interference is reduced. Actually, however, the direction of high-frequency current is opposite between adjacent two of the sub-heating coils SC1 to SC4, the influence by the opposite direction is problematic. In order to suppress such an influence, the sub-heating coils SC1 to SC4 are arranged at specific intervals (the spaces 273 described below) therebetween. Thus, the length of the arc is limited.

More specifically, in the example illustrated in Fig. 4, in the case where the space 271, which is an electrical insulation distance between the main heating coil MC and each of the sub-heating coils SC1 to SC4, is 5 mm, since the outer diameter of the main heating coil MC is 180 mm, which is twice R1, R2 is calculated as R2 = R1 (90 mm) + 5 mm = 95 mm. The length of the circumference of the circle for R2 is about 596.6 mm (= a result obtained by multiplying 190 mm, which is twice the radius R2, by the circular constant 3.14). Thus, in the case where the four sub-heating coils SC1 to SC4 are evenly spaced (at 90 degrees apart), the length of quarter of 596.6 mm is 149.15 mm. The angle formed by Q1 and Q2 is not 90 degrees but is, for example, 60 degrees to 75 degrees. In the case of 70 degrees, instead of 149.15 mm, about 116 mm is obtained by the calculation: 70 degrees/90 degrees (about 0.778) × 149.15 mm. That is, the length of the innermost arc of each of the sub-heating coils SC1 to SC4 is about 116 mm.

Furthermore, in the case where the number of sub-heating coils is four as in Embodiment 1, since the range of 280 degrees (= quadruple of 70 degrees) of 360 degrees around the main heating coil MC forms curved (at a radius of curvatures of R2) arcs (of the sub-heating coils SC) along the outer peripheral surface of the main heating coil MC, it can be said that the direction of the outer circumferential edge of the main heating coil MC and the direction of the inner peripheral edge of each of the sub-heating coils SC1 to SC4 are consistent with each other (in parallel) in a range of about 77.8% (= 280 degrees/360 degrees) (this percentage is referred to as a "consistency percentage" in the description provided below). This means that the degree to which the possibility of being able to causing high-frequency current to flow in the same direction between the main heating coil MC and each of the sub-heating coils SC1 to SC4 is large, and this contributes to reducing the magnetic interference and increasing the heating efficiency for the target object N. For easier explanation, components including the main heating coil MC and the sub-heating coils SC1 to SC4 are not illustrated at a proportional scale in Fig. 4. Since high-frequency current is more likely to flow in the same direction and the length in which the magnetic density is increased in a region where two heating coils are adjacent to each other increases as the consistency percentage increases, it is desirable to have a greater consistency percentage, in terms of heating efficiency. Actually, however, there is a limitation in ensuring the spaces 273, and the consistency percentage cannot be 100%. It is preferable that the consistency percentage is 60% or more, at which excellent heating efficiency can be achieved.

Furthermore, in Fig. 3, the size of a radius R3 is obtained by the calculation: R2 (95 mm) + (the average width WC1 of portions of the entire collective line of a sub-heating coil SC near the main heating coil MC) + (space width 10 mm of the sub-heating coil SC). Since WC1 is 15 mm, R3 is calculated as 110 mm. Here, the average width WC2 of outer portions the entire collective line is 15 mm.

Referring to Fig. 4, the diameter DB (equivalent to DLB in Fig. 3) of the circle including the four sub-heating coils SC1 to SC4 is 270 mm. The diameter DB can be obtained by adding the size (80 mm), which is twice the width of the sub-heating coil: 40 mm, to the size (190 mm), which is twice the radius R2: 95 mm. The space 271 may be
, for example, 10 mm, instead of the minimum size, which is 5 mm. The space 271 is an insulation space that is necessary for ensuring the insulation properties between two objects, that is, the main heating coil MC and each of the sub-heating coils SC1 to SC4, to which electricity is supplied from different power sources. When, for example, a thin-plate like electrical insulator made of porcelain, heat-resistant plastic, or the like is arranged so as to obstruct the space between the main heating coil MC and each of the sub-heating coils SC1 to SC4, the electrical insulation properties of the space 271 can be improved and the size of the space 271 can be further reduced. In the case where the above-mentioned electrical insulator is arranged between the main heating coil MC and each of the sub-heating coils SC1 to SC4, even though a face of the main heating coil MC near each of the sub-heating coils SC1 to SC4 and a face of each of the sub-heating coils SC1 to SC4 near the main heating coil MC do not face each other, this configuration is also called "face" in the invention. That is, in the case where a sub-heating coil faces the outer circumferential edge of the main heating coil with a specific electrical insulation space therebetween, an obstruction that obstructs the space between the sub-heating coil and the main heating coil may exist.

In Fig. 3, DW represents the outer diameter of the target object N, such as a metal pot that can be induction-heated by the cooker. On the basis of the diameter of the main heating coil MC and the thickness WA of each of the sub-heating coils SC1 to SC4 as described above, the (maximum) outer diameter DW of the target object N suitable for heating is about 270 mm to 310 mm in the example illustrated in Fig. 3.

Referring to Fig. 4, reference numeral 276 represents a separate light-emitting unit arranged in a position adjacent to a portion outside each of the sub-heating coils SC1 to SC4. The separate light-emitting unit 276 includes a curved thin light-guiding material that guides light and a light source, such as a light-emitting diode, that supplies light to the light-guiding material. The separate light-emitting unit 276 is controlled by a conduction control circuit (control unit) 200. For example, in the case where the sub-heating coil SC1 is heated, the separate light-emitting unit 276 near the sub-heating coil SC1 emits light, and an arc-shaped light band can be viewed from above the top plate 21. Reference numeral 277 represents a ring-shaped magnetic shield ring arranged in an outermost portion of the heating coil 6LC of the first induction heating unit 6L. Reference numeral 275 represents a space between the separate light-emitting unit 276 and the magnetic shield ring 277.

Fig. 1 is a circuit block diagram of a power supply device built in an induction heating cooker 1. The power supply device includes a converter (for example, also referred to as a diode bridge circuit or a rectifying bridge circuit) that converts a three-phase alternating-current power supply into direct current, a smoothing capacitor connected to an output terminal of the converter, a main inverter circuit (power supply circuit unit) MIV that is provided for the main heating coil MC of the first induction heating unit 6L and that is connected in parallel to the smoothing capacitor, and sub-inverter circuits (power supply circuit units) SIV1 to SIV4 that are provided for the sub-heating coils SC1 to SC4 and that are connected in parallel to the smoothing capacitor. Reference numeral 210L represents an inverter circuit for the first induction heating unit 6L. The inverter circuit 210L includes the main inverter circuit MIV and the four sub-inverter circuits SIV1 to SIV4.

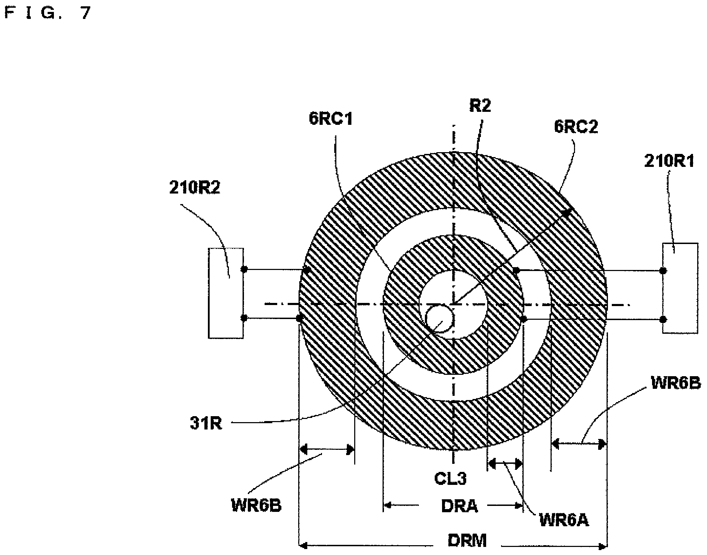

Reference numeral 210R represents an inverter circuit for the second induction heating unit 6R, and reference numeral 210 M represents a driving circuit for the radiation-type central electrical heating unit 7. Since the heating coil 6RC of the second induction heating unit 6R has a dual structure including an inner heating coil 6RC1 wound in a ring shape and an outer heating coil 6RC2 of a ring shape that is arranged in parallel to the heating coil 6RC1, the configuration of the inverter circuit differs from the configuration of the inverter circuit 210L. More specifically, dedicated inverter circuits 210R1 and 210R2 are provided for the inner ring-shaped heating coil 6RC1 and the outer ring-shaped heating coil 6RC2, respectively (see Fig. 7). In Fig. 1, the inverter circuits 210R1 and 210R2 are collectively represented as reference numeral 210R.

Specific explanation will be provided below. The maximum outer diameter DRM of the right heating coil 6RC is 180 mm, which is equal to the outer diameter of the outer ring-shaped heating coil 6RC2.

The maximum outer diameter DRAof the inner ring-shaped heating coil 6RC1 is about 100 mm. The coil width WR6B of the heating coil 6RC is about 30 mm, and the coil width WR6A of the inner coil is about 10 mm.

When a magnetic field is generated by causing current to flow to the inner ring-shaped heating coil 6RC1 and the outer ring-shaped heating coil 6RC2 and a pot placed on the top plate 21 is heated, if the same amount of current flows to the large and small two heating coils, the total amount of contribution to heating of the pot by the magnetic field generated from the outer ring-shaped heating coil 6RC2 having a larger area is greater than that by the inner ring-shaped heating coil 6RC1.

In this embodiment, the heating coil 6RC of the right induction heating unit 6R includes two portions, the inner ring-shaped heating coil 6RC1 having an outer diameter of 100 mm and the outer ring-shaped heating coil 6RC2 having an outer diameter of 180 mm surrounding outside the heating coil 6RC1, and high-frequency current is individually supplied from the inverter circuits 210R1 and 210R2 to the heating coil 6RC so that the inner ring-shaped heating coil 6RC1 and outer ring-shaped heating coil 6RC2 are heated separately.

Thus, for example, only by driving the inner ring-shaped heating coil 6RC1, a target object N having a small diameter (for example, about 80 mm to 120 mm) can be induction-heated. In contrast, by driving the outer ring-shaped heating coil 6RC2 and the inner ring-shaped heating coil 6RC1 at the same time (or alternately achieving conduction for a short period of time), a target object N having a greater diameter, such as, for example, about 200 mm, can be heated.

Since the inverter circuits 210R1 and 210R2 are connected to the inner ring-shaped heating coil 6RC1 having a smaller diameter and the outer ring-shaped heating coil 6RC2 having a greater diameter, respectively, and the frequencies of currents flowing to these heating coils are set to be the same, by changing the operating frequency and duty of a switching element, the current flowing to the inner ring-shaped heating coil 6RC1 and the current flowing to the outer ring-shaped heating coil 6RC2 having a greater diameter are set to differ from each other within a specific range. In the case where electric power is adjusted by changing the duty ratio, under a condition in which the voltage applied to the switching element is constant, the maximum output can be achieved when the duty ratio is 0.5, that is, when the rate of the conduction state to non-conduction state of two switching elements connected in series to each other is 1:1.

With this configuration, since different amount of current can be caused to flow to coils, the amount of magnetic field generated from the inner and outer heating coils can be set to be different from each other.

In existing technologies, an inner heating coil is less likely to contribute to heating since the inner heating coil has a coil diameter smaller than that of an outer heating coil. In addition, the magnetic field generated by the outer heating coil is large and the heating distribution is formed in a donut shape. However, in Embodiment 1 by causing different coil currents to flow to the inner heating coil and the outer heating coil and increasing the coil current flowing to the inner ring-shaped heating coil 6RC1 to increase the heating amount, a uniform heating distribution can be provided to the entire right heating coil 6RC.

In the case where a single pot is heated by a plurality of heating coils, the electric power applied to the pot is equal to the sum of electric powers applied from the heating coils to the pot. Thus, the amount of electric power caused to flow to the outer heating coil can be decreased, within a specific rated maximum heating power (for example, 2000 W), in proportion to the amount of increase in the heating power obtained by increasing the amount of current caused to flow to the inner heating coil. Accordingly, a difference in the temperature between the inner and outer heating coils can be decreased.

Furthermore, by causing a large amount of current to flow to the inner heating coil, even the amount of heat generation of the inner heating coil having a small number of windings can be increased. Compared to a related art in which the magnetic field generated by the outer ring-shaped coil is too strong to achieve a uniform heating distribution and a so-called donut-shaped area of high heating intensity is obtained in the outer periphery, a uniform heating distribution can be approached. Thus, an induction heating cooker having an excellent cooking performance can be provided.

The main inverter circuit MIV and the sub-inverter circuits SIV1 to SIV4 convert direct current from the converter into high-frequency current, and supply the high-frequency current to the main heating coil MC and each of the sub-heating coils SC1 to SC4 separately (from one another).

In general, since the impedance of an induction heating coil changes depending on the presence or absence and the size (area) of a target object N placed above the induction heating coil, the amount of current flowing to the main inverter circuit MIV and the sub-inverter circuits SIV1 to SIV4 also changes in accordance with the change in the impedance of the induction heating coil. The power supply device according to the invention includes a current detection unit (detection means) 280 for detecting the amount of current flowing to each of the main heating coil MC and the sub-heating coils SC1 to SC4. The current detection unit is one type of an object-to-be-heated placement determination unit 400.

According to the present invention, by detecting, using the current detection unit 280, the amount of current flowing to the main heating coil MC and the sub-heating coils SC1 to SC4, it is estimated whether a target object N is placed above each of the coils or whether the area of the bottom of the target object N is greater than a specific value, and the result of the estimation is transmitted to the control unit (hereinafter, referred to as a "conduction control circuit") 200. Thus, the placement state of the target object N can be accurately detected.

Although the current detection unit 280 for detecting the amount of current flowing to the main inverter circuit MIV and the sub-inverter circuits SIV1 to SIV4 is used as the object-to-be-heated placement determination unit 400 for detecting the placement state of a target object N, the current detection unit 280 is not necessarily used for detecting the placement state of a target object N. The placement state of a target object N may be detected using a different sensor, such as a mechanical sensor, an optical sensor, or the like.

The conduction control circuit 200 of the power supply device according to the invention is connected to the current detection unit 280, as illustrated in the drawing, and supplies control signals to the main inverter circuit MIV and the sub-inverter circuits SIV1 to SIV4, in accordance with the placement state of a target object N. That is, the conduction control circuit 200 receives signals (data representing the placement state of a target object N) regarding the amount of current flowing to the main heating coil MC and the sub-heating coils SC1 to SC4 detected by the current detection unit 280, and in the case where it is determined that a target object N is not placed or that the diameter of a target object N is smaller than a specific value (for example, 120 mm), the main inverter circuit MIV and the sub-inverter circuits SIV1 to SIV4 are selectively controlled in such a manner that supply of high-frequency current to the main heating coil MC and the sub-heating coils SC1 to SC4 is inhibited or stopped (in the case where supply has already started).

According to the invention, by supplying control signals corresponding to the placement state of a target object N to the main inverter circuit MIV and the sub-inverter circuits SIV1 to SIV4, the conduction control circuit 200 is capable of separately controlling supply of electric power to the main heating coil MC and the sub-heating coils SC1 to SC4. Furthermore, by not driving (turning off) the main heating coil MC, which is located at the center, and driving (turning on) all the sub-heating coils SC1 to SC4, a cooking method for preheating only an edge of a frying pan or the like (side face of the pan) can be realized.

A display screen 100 of the display means G will now be explained.

In Embodiment 1, since the display screen 100 is shared among all the heat sources, the display screen 100 is also called integrated display means. In the case where the first and second induction heating units 6L and 6R, the radiation-type central electrical heating unit 7, and electric heating means called a grill chamber (grill heating chamber) or a roaster, all the heat sources include the electric heating means. The display screen 100 used as the integrated display means in Embodiment 1 is a well-known dot-matrix liquid crystal display screen. Furthermore, a high-definition (corresponding to QVGA having a resolution of 320 × 240 pixels or VGA that is capable of displaying 640 × 480 dots, 16 colors) can be realized, and a large number of characters can be displayed when characters are displayed. The number of layers of the liquid crystal display screen is not limited to one. In order to increase the amount of information to be displayed, a liquid crystal display screen that displays information on up and down two or more layers may be used. Furthermore, the liquid crystal display screen may be formed of an STN (Super Twisted Nematic) liquid crystal using a simple matrix driving method. A user is able to issue a heating instruction using the display screen. The description of a heating instruction by a user will be provided later.

In Embodiment 1, the display area of the display screen 100 is a rectangle having a vertical (front-back direction) size of about 70 mm (or about 80 mm) and a horizontal size of about 100 mm (or about 120 mm).

Although not illustrated, the display screen is driven by a display driving circuit. The display unit driving circuit is connected to the conduction control circuit 200.

Furthermore, although not illustrated, the display unit driving circuit includes a display memory, a display controller, an interface circuit, a dedicated power supply, a common driver circuit, and a segment driver circuit. Thus, the display unit driving circuit operates in accordance with electric power from the dedicated power supply, and acquires image information by the interface circuit from the display memory. Furthermore, the display memory stores therein the image information acquired from the conduction control circuit 200. The display controller reads the image information stored in the display memory, and drives the common driver circuit and the segment driver circuit on the basis of the image information. By applying voltage to electrodes that are arranged corresponding to pixels of the display screen 100 and that alternately cross each other, the common driver circuit and the segment driver circuit drive liquid crystal. As described above, the display driving circuit causes image information stored in the display memory to be displayed on the display screen 100 as necessary. The display unit driving circuit includes a dedicated microcomputer that is different from a microcomputer configuring the conduction control circuit 200.

Reference numeral 31 represents a temperature sensing circuit including a temperature sensing element (hereinafter, referred to as a "temperature sensor") 31L. In terms of accurate temperature sensing, it is desirable that a plurality of temperature sensing units are arranged in the temperature sensor. For example, in the example illustrated in Fig. 4, five temperature sensors 31L1 to 31L5 are provided, and one of the temperature sensors 31L1 to 31L5 is arranged in a space inside the main heating coil MC arranged at the center of the heating coil 6LC of the first induction heating unit 6L. The temperature sensors are infrared ray temperature sensors for measuring temperature by detecting the amount of infrared ray emitted from a target object N or thermal temperature sensors, such as, for example, thermistor sensors. Similarly, an infrared ray temperature sensor 31R (not illustrated) is provided for the heating coil 6RC of the second induction heating unit 6R. The number of temperature sensing units is not limited to one. In order to obtain temperature of the bottom of a target object N as accurate as possible, a plurality of temperature sensing units may be arranged with spaces therebetween. For example, as illustrated in Fig. 4, in this embodiment, five temperature sensing units are provided. That is, temperature sensing units are provided inside the main heating coil MC and a space between the main heating coil and each of the sub-heating coils SC1 to SC4 or a space inside each of the sub-heating coils SC1 to SC4.

In the case where the number of temperature sensors is set to four (31L1 in Fig. 4 is omitted), instead of five, it is desirable that all the temperature sensors are arranged in a space inside the main heating coil MC, as illustrated in Fig. 5. Moreover, it is desirable that a condition of arranging each of the temperature sensors between two adjacent sub-heating coils is satisfied at the same time. For example, in the case where the temperature sensor 31L2 is arranged between the sub-heating coils SC2 and SC1, when a small pot having a diameter that covers only above the main heating coil MC is placed, the temperature sensor 31L2 is positioned below the bottom of the pot. In addition, in this case, when an elliptical or rectangular pot that covers above the main heating coil MC and the two adjacent sub-heating coils SC2 and SC1 is placed, the temperature sensor 31L2 is also positioned below the bottom of the elliptical or rectangular pot. Thus, this configuration provides an advantage of being capable of performing temperature sensing not only in the case where a pot having a small diameter is used but also in the case where a pot having a large diameter is used. In this case, the temperature sensor 31L2 may be of a thermistor type or an infrared ray type. In other words, in the configuration in which the sub-heating coils SC1 to SC4 are arranged around the ring-shaped main heating coil MC and are concentric to the main heating coil MC with the space 271 therebetween, in the case where the positions of the temperature sensors 31L2 to 31L5 (the positions of the temperature sensing units) serving as the temperature sensing means are four positions in a space inside the main heating coil MC and a temperature sensing unit at each of the positions is near adjacent two sub-heating coils than a straight line connecting remote ends of the adjacent two sub-heating coils, an advantage of being capable of achieving temperature sensing even when a pot having a large diameter as well as a pot having a small diameter is used can be attained.

Similarly, in the case where the temperature sensor 31L3 is arranged between the sub-heating coils SC2 and SC4, when a pot having a small diameter that covers only above the main heating coil MC is placed, the temperature sensor 31L3 is positioned below the bottom of the pot. In addition, in this case, when an elliptical or rectangular pot that covers above the main heating coil MC and the two adjacent sub-heating coils SC2 and SC4 is placed, the temperature sensor 31L3 is also positioned below the bottom of the elliptical or rectangular pot. Thus, this configuration provides an advantage of being capable of achieving temperature sensing when a pot having a large diameter as well as a pot having a small diameter is used can be attained.

Since infrared ray sensors are more expensive than thermistor sensors, in the case where four temperature sensors are used as illustrated in Fig. 5, for example, only the temperature sensor 31L5 may be an infrared ray sensor and the other three temperature sensors may be of a thermistor type.

A temperature sensor of an infrared ray type includes a photodiode or the like that is capable of measuring temperature by sensing the amount of infrared ray emitted from a target object N such as a pot. This type of sensor is superior (to a thermistor type) in being capable of collecting and receiving in real time (with a negligible time difference) infrared ray emitted from a target object N and sensing temperature on the basis of the amount of infrared ray. Such a temperature sensor is capable of sensing the temperature of the target object N even if the temperature of the top plate 21 positioned before the target object N and the temperature of the target object N are not the same and irrespective of the temperature of the top plate 21. That is, it is devised such that infrared ray emitted from the target object N is not absorbed into or interrupted by the top plate 21.

For example, a material that transmits infrared ray having a wavelength range of 4.0 µm or 2.5 µm or less is selected as a material of the top plate 21, and a sensor that senses infrared ray having a wavelength range of 4.0 µm or 2.5 µm or less is selected as a temperature sensor.

Three heat-transfer sensing elements, such as, for example, thermistor temperature sensors, are used as temperature sensors, as described above. Temperature sensors of a heat transfer type, such as thermistors, are inferior to infrared ray temperature sensors in terms of real-time acquisition of a sudden temperature change, but are capable of reliably sensing, by receiving radiant heat from the top plate 21 and a target object N, the temperature of the bottom of the target object N and the top plate 21 below the bottom of the target object N. Furthermore, even if a target object N does not exist, heat-transfer temperature sensors are capable of sensing the temperature of the top plate 21.

In addition, the temperature sensors and the temperature sensing circuit 31 form a part of the object-to-be-heated placement determination unit 400, which is means for detecting that a target object N is not placed above the main and sub-heating coils. That is, the current detection unit 280 and the temperature sensing circuit 31 can function as an object-to-be-heated placement detecting unit.

As represented by alternate long and short dashed lines in Fig. 2, reference numerals 40L and 40R represent upper operation units arranged above the front flange 3F on left and right with a space therebetween. The operation units receive instructions from various input keys formed on the surface of the top plate 21, and are capable of setting the conduction time, heating power, and the like of the first induction heating unit 6L, the second induction heating unit 6R, and the radiation-type central electrical heating unit 7. The operation units are capable of setting conduction conditions, independent of settings by electrostatic-capacitance touch-input various keys arranged on the surface of the display screen 100, which will be described later.

Reference numeral 50 represents an operation key for a main power switch (not illustrated) for collectively turning on or turning off all the power sources for the first induction heating unit 6L, the second induction heating unit 6R, and the radiation-type central electrical heating unit 7. The operation key 50 is configured such that power is turned on when a user presses the operation key 50 and the power is turned off when the user presses the operation key 50 again.

A specific operation will now be explained. Prior to the explanation of the specific operation, main cooking menus that can be executed by the conduction control circuit 200 configuring the core part of the control means F in the invention will be explained.

"High-speed heating mode" (cooking menu in which priority is given to heating speed, selected using the first selection unit E1).

Heating power to be applied to a target object N can be manually set. In this case, a user selects, as the total sum of heating powers of the main heating coil MC and the sub-heating coils, one of the sixteen stages mentioned below within a range between 120 W and 3000 W:
150 W, 200 W, 300 W, 400 W, 500 W, 625 W, 750 W, 875 W, 1000 W, 1250 W, 1500 W, 1750 W, 2000 W, 2250 W, 2500 W, and 3000 W.

The heating power ratio of the main heating coil MC to the sub-heating coils SC1 to SC4 (hereinafter, referred to as a "main/sub heating power ratio") is automatically set by the conduction control circuit 200 so as not to exceed the total sum of heating powers selected by the user within a specific range of heating power ratio, and the user cannot set a desired main/sub heating power ratio. For example, the main/sub heating power ratio is within a range from 2:3 (when the heating power is large) to 1:1 (when the heating power is small).

The main heating coil MC and the sub-heating coils SC1 to SC4 are driven at the same time. In this case, however, it is controlled such that the directions of high-frequency currents in an area the main heating coil MC and each of the sub-heating coils SC1 to SC4 are adjacent to each other are made consistent with each other.

"Fry mode" (automatic) (cooking menu requiring heating speed and keep-warm function, selected using the third selection unit E3).

An target object N (tempura pot etc.) in which fry oil is put is heated up to a specific temperature (first step) and then the conduction control circuit 200 automatically adjusts the heating power in such a manner that the temperature of the target object N is kept within a specific range (second step).

First step: Heating is performed in such a manner that the temperature rapidly reaches a specific preheating temperature (for example, 180 degrees C). A user is able to set, as the specific preheating temperature, a desired one of seven temperatures: 180 degrees C, 190 degrees C, 200 degrees C, 210 degrees C, 220 degrees C, 230 degrees C, and 240 degrees C.

The heating power of the main heating coil is set to 2500 W.

Second step: In this step, in order to perform frying, ingredients of tempura are added. Operation of up to thirty minutes is performed. In this step, a (desired) heating power setting by a heating power setting unit is inhibited. After thirty minutes have passed, the heating operation is automatically terminated (an instruction for extension is acceptable).

The main/sub heating power ratio is automatically determined so as to be within a specific range in both the first and second steps, and the user cannot set the heating power ratio of the main heating coil to the sub-heating coils in a desired manner. For example, the main/sub heating power ratio is automatically changed between 2:3 (when the heating power is large) and 1:1 (when the heating power is small).

The main and sub-heating coils are driven at the same time in the first step, and the flows of high-frequency currents in coils are consistent with each other in an area in which the coils are adjacent to each other. This is because the temperature is rapidly increased up to a specific temperature. Similarly, in the second step, the main and sub-heating coils are driven at the same time, and the flows of high-frequency currents in coils are made consistent with each other. However, if the state in which a change in the temperature is small continues in the process of frying, in order to achieve even heating, the directions of currents are made opposite to each other.

"Preheat mode" (cooking menu in which priority is given to heating evenness, selected using the second selection unit E2).

A first preheating step, in which setting or changing of heating power is inhibited and a target object N is heated up to a first preheating temperature (using a sensing temperature signal from a temperature sensor) at a predetermined heating power, is performed. After the first preheating step is completed, a second preheating step, in which the target object N is heated up to a second preheating temperature (using a sensing temperature signal from the temperature sensor), is performed. After the second heating step is completed, a keep-warm step for keeping the temperature within a range between the second preheating temperature and the first preheating temperature is performed.

### First preheating step:

The first preheating temperature (first target temperature) is 200 degrees C (default value. Alternatively, the user can set a desired temperature between 180 degrees C and 240 degrees C at intervals of 10 degrees C).
Main heating coil 2000 W (when the heating power is maximum)
Sub-heating coil 2000 W (when the heating power is maximum)

### Second preheating step:

This step is a step up to the second preheating temperature (second target temperature). The second preheating temperature is 240 degrees C (default value). Alternatively, the user can set a desired temperature between 180 degrees C and 240 degrees C at intervals of 10 degrees C. However, the second preheating temperature cannot be set to the same temperature as the first preheating temperature, and a difference of 10 degrees C or more always needs to be maintained between the second preheating temperature and the first preheating temperature.
Main heating coil 500 W (when the heating power is maximum)
Sub-heating coil 500 W (when the heating power is maximum)
Keep-warm step: Five minutes at the most. In the case where a (desired) heating power is not set during this step, after five minutes have passed, the heating operation is automatically terminated.
Main heating coil 300 W to 100 W (the user cannot perform setting)
Sub-heating coil 300 W to 100 W (the user cannot perform setting)
In the case where a desired heating power is set during the keep-warm step, an operation that is the same as high-speed heating is performed.

Regarding setting of a desired heating power, the user can select, as the total sum of heating powers of the main heating coil MC and the sub-heating coils, one of the sixteen stages mentioned below within a range between 120 W and 3000 W:
150 W, 200 W, 300 W, 400 W, 500 W, 625 W, 750 W, 875 W, 1000 W, 1250 W, 1500 W, 1750 W, 2000 W, 2250 W, 2500 W, and 3000 W.

In the keep-warm step, as described below, the main heating coil MC and the four sub-heating coils SC1 to SC4 are controlled by the conduction control circuit 200 in such a manner that various conduction patterns, such as conduction of all the main heating coil MC and the sub-heating coils SC1 to SC4 at the same time or conduction of only one of the main heating coil MC and the four sub-heating coils SC1 to SC4, can be achieved. In this case, the main/sub heating power ratio is automatically determined by the conduction control circuit 200 so as to be within a specific heating power ratio, and the user cannot perform setting in a desired manner. For example, the main/sub heating power ratio changes according to the conduction section (for each specific time section), for example, within a range from 1:4 to 2:1. There are various patterns of combination of heating powers of the main heating coil MC and the sub-heating coils SC1 to SC4, and the main/sub heating power ratio varies according to the magnitude of the total sum of electric powers and the "section" (may also be referred to as a "period"), which will be described later.

Although the main and sub-heating coils are driven at the same time in the preheating step, the directions of high-frequency currents in an area in which coils are adjacent to each other are opposite to each other. This is because causing magnetic flux generated by both the heating coils to be interfered with each other in the area in which the coils are adjacent to each other and achieving even heating intensity is emphasized. Also in the keep-warm step, although the main and sub-heating coils are driven at the same time, the directions of high-frequency currents in an area in which coils are adjacent to each other are opposite to each other. This is because evenness is achieved in the entire temperature distribution.

In the keep-warm step, a convection acceleration control is started on the basis of an instruction by a user. The convection acceleration control will be described later.

"Water-boiling mode" (cooking menu in which priority is given to heating speed, selected using the first selection unit E1).

When a user starts heating of water in a target object N at a desired heating power and the water is boiling (by a temperature sensor, on the basis of information on the temperature of the target object N, a change in the degree of increase in the temperature, or the like, the conduction control circuit 200 determines that the water is in a boiling state), the display means G informs the user of the state in which the water is in the boiling state. Then, the heating power is automatically set, and the boiling state is maintained only for two minutes.

### Boiling step:

The total sum of heating powers of the main heating coil and the sub-heating coils is set within a range from 120 W to 3000 W (a desired stage of sixteen stages from heating power 1 to heating power 13 can be set. A default set value is a heating power of 13 = 2000 W).

The main/sub heating power ratio is automatically determined by the conduction control circuit 200 so as not to exceed the total sum of heating powers selected by the user within a specific range of heating power ratio, and the user cannot set a main/sub heating power ratio in a desired manner. For example, the main/sub heating power ratio is within a range from 2:3 (when the heating power is large) to 1:1 (when the heating power is small).
Keep-warm step: Two minutes at most. After two minutes have passed, the heating operation is automatically terminated.
Main heating coil 1000 W or less (the user cannot perform setting)
Sub-heating coils 1500 W or less (the user cannot perform setting)
In the case where the user sets a desired heating power during this period, an operation that is the same as high-speed heating is performed. Regarding heating power, one of the sixteen stages within a range between 120 W and 3000 W can be selected.

Before the boil is reached, the main heating coil MC and the sub-heating coils SC1 to SC4 are driven at the same time, and it is controlled such that the directions of high-frequency currents in an area in which coils are adjacent to each other are made consistent with each other. After the boil is reached, the directions of currents are made opposite to each other.

"Rice-cooking mode" (cooking menu in which priority is given to heating evenness, selected using the second selection unit E2).

A user sets a vessel serving as a target object N in which appropriate amount of rice and water is added. The vessel is heated in accordance with a specific rice-cooking program (a series of programs including a water absorption step, a heating step, a boiling step, a steaming step, and the like). Accordingly, rice-cooking is automatically performed.
Water absorption step and rice-cooking step
Main heating coil 600 W or less (the user cannot perform setting, and automatic change is made in accordance with the progress of the step)
Sub heating coils 700 W or less (the user cannot perform setting, and automatic change is made in accordance with the progress of the step)
Steaming step: five minutes for the main coil, zero heating (heating power is 0 W)
Keep-warm step: five minutes at most.
Main heating coil 200 W or less (the user cannot perform setting or changing)
Sub-heating coils 200 W or less (the user cannot perform setting or changing)

Although the main and sub-heating coils are driven at the same time, it is controlled such that the directions of high-frequency currents in an area in which coils are adjacent each other are made opposite to each other. This is because causing magnetic fields generated by both the heating coils to be interfered with each other in the area in which the coils are adjacent to each other and achieving even heating intensity is emphasized.

In the case where the object-to-be-heated placement determination unit 400 detects that no target object N is placed above the main and sub-heating coils after the rice-cooking step is completed, or in the case where the object-to-be-heated placement determination unit detects that no target object N is placed above the main and sub-heating coils in any of the steaming step and the keep-warm step, the main and sub-heating coils immediately stop the heating operation.

"Boiling mode" (cooking menu in which priority is given to heating speed, selected using the first selection unit E1).

### Heating step (up to boiling):

Heating power to be applied to a target object N can be manually set.

A user selects, as the total sum of heating powers of the main heating coil MC and the sub-heating coils, one of the sixteen stages mentioned below within a range between 120 W and 3000 W:
150 W, 200 W, 300 W, 400 W, 500 W, 625 W, 750 W, 875 W, 1000 W, 1250 W, 1500 W, 1750 W, 2000 W, 2250 W, 2500 W, and 3000 W.

The default value is 3000 W (in the case where the user does not select a heating power, heating is started at 3000 W).

The main/sub heating power ratio is automatically determined by the conduction control circuit 200 so as to be within a specific heating power ratio range, and the user cannot set a desired main/sub heating power ratio. For example, the main/sub heating power ratio changes according to the conduction section (for each specific time section), for example, from 1:4 to 2:1. There are various patterns of combination of heating powers of the main heating coil MC and the sub-heating coils SC1 to SC4, and the main/sub heating power ratio varies according to the magnitude of the total sum of electric powers and the "section" (may also be referred to as a "period") described below.

### After the boil is reached:

When water is boiling (the control unit estimates, by a temperature sensor of the temperature sensing circuit 31, on the basis of information on the temperature of a target object N, a change in the degree of increase in the temperature, or the like, that water is in a boiling state), the user is informed of the water-boiling state.

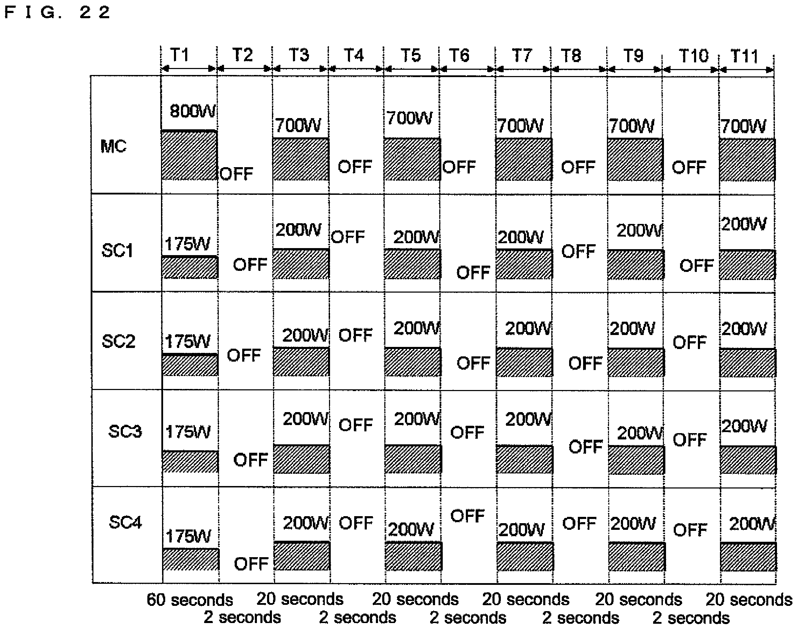

Then, for the next consecutive thirty minutes (extension is acceptable), the heating operation automatically continues to be performed at the default value (for example, 1500 W) in such a manner that the boiling state is maintained. However, the user may select a desired heating power after the boil is reached. In this boiling mode, for example, heating pattern 10, which will be described later (Fig. 22), is suitable.

During the whole heating step to the boil, the main heating coil MC and the sub-heating coils SC1 to SC4 are driven at the same time, and it is controlled such that the directions of high-frequency currents in an area in which coils are adjacent to each other are made consistent with each other. Furthermore, after the boil is reached (unless the user performs an operation for inhibition), "convection acceleration control" is automatically started. The convection acceleration control will be described later.

"Water-boiling + keep-warm mode" (cooking menu in which priority is given to heating speed and evenness, selected using the third selection unit E3)

A user starts heating of water in a target object N at a desired heating power. When the water is boiling (the control unit estimates, by a temperature sensor on the basis of information on the temperature of the target object N, a change in the degree of increase in the temperature, or the like, that water is in a boiling state), the display means G informs the user of the water-boiling state. Then, a heating power is automatically set, and the boiling state is maintained for only two minutes.

### Water-boiling step:

The total heating power of the main heating coil and the sub-heating coils is set within a range from 120 W to 3000 W (a desired one of sixteen stages from heating power 1 to heating power 13 is set, and the default set value is a heating power of 13 = 2000 W).

The main/sub heating power ratio is automatically determined by the conduction control circuit 200 so as not to exceed the total sum of heating powers selected by the user within a specific range of heating power ratio, and the user cannot set a desired main/sub heating power ratio. For example, the main/sub heating power ratio is within a range from 2:3 (when the heating power is large) to 1:1 (when the heating power is small).
Keep-warm step: ten minutes at most. After ten minutes have passed, the heating operation is automatically terminated.
Main heating coil 1000 W or less (the user cannot perform setting or changing)
Sub-heating coils 1500 W or less (the user cannot perform setting or changing)

Until the boil is reached, it is controlled such that the directions of high-frequency currents in an area in which the main heating coil MC and the sub-heating coils SC1 to SC4 are adjacent to each other are made consistent with each other. After the boil is reached, the directions of the currents are made opposite to each other. Furthermore, after the boil is reached, convection acceleration control is started in accordance with an operation by the user. The convection acceleration control will be described later.

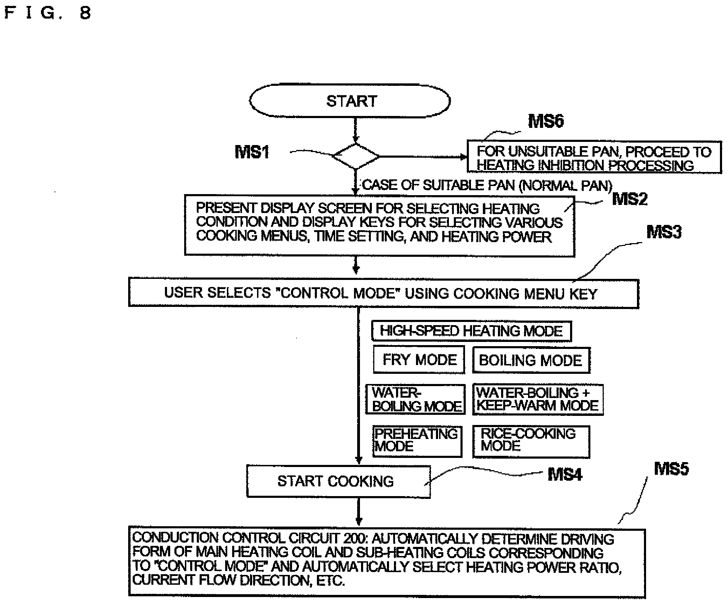

Hereinafter, a basic operation of the induction heating cooker according to the invention will be described with reference to Fig. 8. First, in a case where an operation key 50 of a main power supply is turned on and a user issues, using an operation unit (not illustrated), an instruction for a heating preparation operation, by detecting the amount of current flowing to the main heating coil MC and the sub-heating coils SC1 to SC4 using the current detection unit 280, it is determined whether or not a target object N is placed above each of the coils or it is determined whether or not the area of the bottom of the target object N is greater than a specific value, and the result of the determination is transmitted to the conduction control circuit 200, which serves as a control unit (step MS1).

In the case where it is determined that a suitable pot exists, the conduction control circuit 200 displays, for example, on a liquid crystal display screen of the operation means E or the display means G placed near the operation means E, a display urging the user to select a desired cooking menu (MS2). In the case where an unsuitable deformed pot (a pot whose bottom is recessed or the like), a pot having a too small size, or the like exists, heating inhibition processing is performed (MS6).

When the user selects and inputs, using the operation unit, a cooking menu, heating power, cooking time, and the like, heating operation is genuinely started (MS4).

The above-described seven cooking menus: "high-speed heating mode", "fry mode", "water-boiling mode", "preheating mode", "rice-cooking mode", "boiling mode", and "water-boiling + keep-warm mode", are displayed on the display means G. In the description provided below, the term "mode" may be omitted. For example, a "water-boiling mode" may be described as "water-boiling," and a "high-speed heating mode" may be described as "high-speed heating."

When the user selects a desired one of the seven cooking menus, a control mode corresponding to the selected menu is automatically selected in accordance with a built-in program in the conduction control circuit 200, and permission or inhibition of conduction, the amount of conduction (heating power), conduction time, and the like for each of the main heating coil MC and the sub-heating coils SC1 to SC4 are set. Depending on the cooking menu, a display urging the user to set a desired heating power, conduction time, and the like is provided by the display unit (MS5).

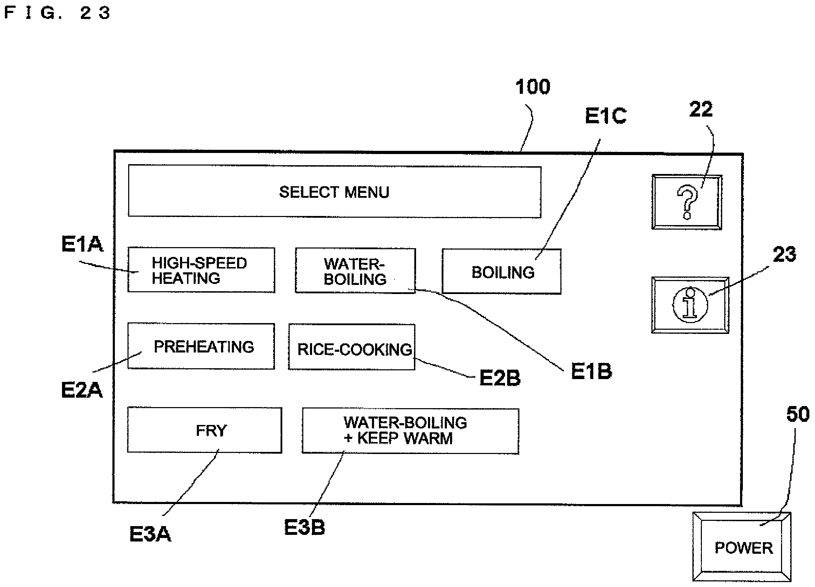

Although in Fig. 1 only three selection units: the selection units E1, E2, and E3, are provided, seven cooking menus are displayed on the display means G. Actually, however, as illustrated in Fig. 23, E1 includes a key for selecting among "high-speed heating" E1A, "water-boiling E1B," and "boiling" E1C. Similarly, the selection unit E2 includes a key for selecting between "preheating" E2A and "rice-cooking" E2B, and the selection unit E3 includes a key for selecting between "water-boiling + keep warm" E3B and "fry" E3A.

### (First burning suppression control)

Next, burning suppression control, which is a feature of the invention, will be explained. In the case where a temperature sensor detects that the temperature of a target object N has increased, for example, up to 98 degrees C after the boil is reached or immediately before the boil is reached or in the case where the conduction control circuit 200 determines, on the basis of the elapsed time from start of cooking, that a boiling state will be entered soon, it is desirable that burning suppression control is started at a time instructed by the user in a desired manner after the above-mentioned detection result is obtained, for example, immediately after operation is performed. However, for a particular cooking menu after the boiling state is entered, the burning suppression control may be automatically entered unless the user inhibits the burning suppression control or heating is stopped during the process.

In this control, a target object N is heated by any of the sub-heating coils SC1 to SC4 during a period in which the main heating coil MC is not operating.

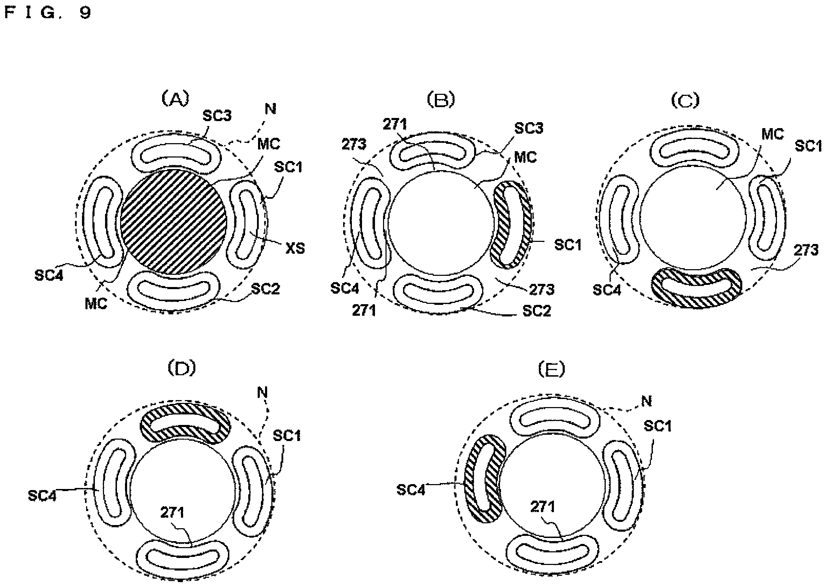

Fig. 9(A) illustrates the state in which only the main heating coil MC is supplied with high-frequency current from the main inverter circuit MIV and is driven for heating. In this case, a heating area for a target object N is a portion immediately above the main heating coil MC. Thus, based on the heating area, an object to be cooked, such as curry or stew, contained in the target object N is heated in the portion immediately above the main heating coil MC. The heating power of the main heating coil MC is small, such as about 200 W.

Similarly, Fig. 9(B) illustrates the state in which only the sub-heating coil SC1 is supplied with high-frequency current from the sub-inverter circuit SIV1.

In this case, a heating area for the target object N is a portion immediately above the sub-heating coil SC1. Thus, based on the heating area, an object to be cooked, such as curry or stew, contained in the target object N is heated in the portion immediately above the sub-heating coil SC1. The heating power of the sub-heating coil SC1 is small, such as about 200 W.

Similarly, Fig. 9(C) illustrates the state in which only the sub-heating coil SC2 is supplied with high-frequency current from the sub-inverter circuit SIV2.

In this case, a heating area for the target object N is a portion immediately above the sub-heating coil SC2. Thus, based on the heating area, an object to be cooked, such as curry or stew, contained in the target object N is heated in the portion immediately above the sub-heating coil SC2. The heating power of the sub-heating coil SC2 is small, such as about 200 W.

Similarly, Fig. 9(D) illustrates the state in which only the sub-heating coil SC3 is supplied with high-frequency current from the sub-inverter circuit SIV3.

In this case, a heating area for the target object N is a portion immediately above the sub-heating coil SC3. Thus, based on the heating area, an object to be cooked, such as curry or stew, contained in the target object N is heated in the portion immediately above the sub-heating coil SC3. The heating power of the sub-heating coil SC3 is small, such as about 200 W.

Similarly, Fig. 9(E) illustrates the state in which only the sub-heating coil SC4 is supplied with high-frequency current from the sub-inverter circuit SIV4.

In this case, a heating area for the target object N is a portion immediately above the sub-heating coil SC4. Thus, based on the heating area, an object to be cooked, such as curry or stew, contained in the target object N is heated in the portion immediately above the sub-heating coil SC4. The heating power of the sub-heating coil SC4 is small, such as about 200 W.

In the case where heating is performed by the main heating coil MC and the sub-heating coils SC1 to SC4 at the same time, the temperature of the bottom of a pot immediately above the main heating coil MC, from which heat is unlikely to escape, increases, and burning is likely to occur. Furthermore, for simmering for curry, stew, or the like, an ingredient often sticks to the bottom of the pot. Thus, the temperature of the portion to which the ingredient sticks locally increases, and burning is likely to occur.

As described above, by heating the main heating coil MC, the sub-heating coil SC1, the sub-heating coil SC2, the sub-heating coil SC3, and the sub-heating coil SC4 in that order, heating areas are sequentially moved. Thus, a time during which the ingredients are cooled is provided, and a more uniform temperature can be maintained over the bottom of the pot, which prevents burning.

### (First conduction pattern)

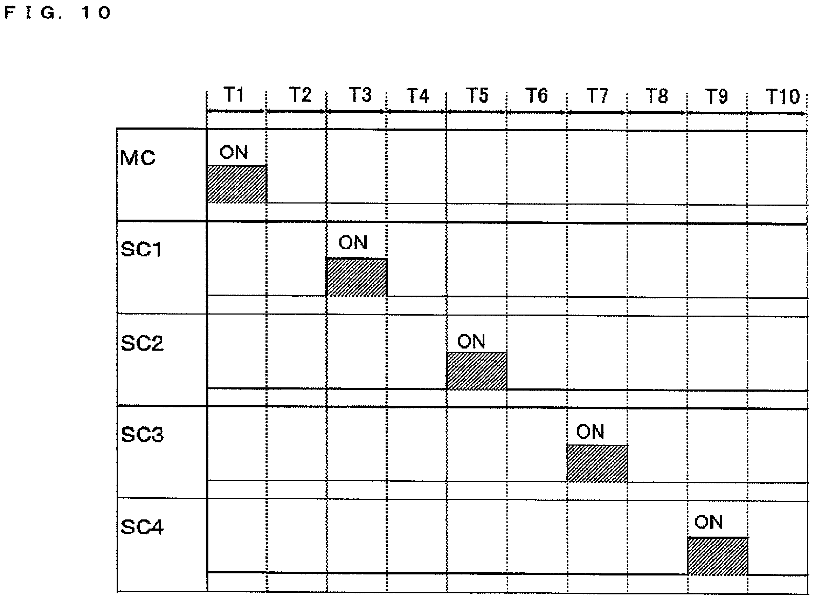

Fig. 10 is an explanatory diagram illustrating the timing at which currents flow to the main heating coil MC and the sub-heating coils SC1 to SC4, with respect to the heating operation illustrated in Fig. 9. In Fig. 10, the state in which high-frequency current to be driven for heating is applied is represented as "ON," and the OFF state in which high-frequency current is not applied is represented as "OFF." Hereinafter, the conduction form illustrated in Fig. 10 may be called a "first conduction pattern."

In the description provided below, a period for conduction control is called a "section." Unless particularly explained, a section 1 is represented as T1. Thus, T1 also represents a "period 1." Similarly, a section 2 is represented as T2, which corresponds to a "period 2." According to this example, in the case where ten periods exist, sections 3 to 10 are represented as T3 to T10, respectively.

As illustrated in Fig. 10, in a plurality of sections T1 to T10 configured at specific time intervals, the main heating coil MC is in the ON state in section T1, all the coils are in the OFF state in section T2, the sub-heating coil SC1 is in the ON state in section T3, all the coils are in the OFF state in section T4, the sub-heating coil SC2 is in the ON state in section 5, all the coils are in the OFF state in section T6, the sub-heating coil SC3 is in the ON state in section T7, all the coils are in the OFF state in section T8, the sub-heating coil SC4 is in the ON state in section T9, and all the coils are in the OFF state in section T10.

Each of the sections T1 to T10 illustrated in Fig. 10 may be about 1 to 60 seconds. Subsequently, currents flowing to the main heating coil MC and the sub-heating coils SC1 to SC4 enter the ON or OFF state at specific time intervals. The state in which each section is about 1 to 60 seconds means two cases: a case in which each of the sections T1 to T10 is set at ten-second intervals, ten seconds, is also set for each of the sections T1 to T10 for the next control and a case where each of the sections T1 to T10 is set at ten-second intervals and a different period of time is set for each of the sections T1 to T10 for the next control. In the latter case, for example, all the sections T1 to T10 are each set to fifteen seconds. Sections T1 and T2 and sections T3 and T4 may be different from each other. For example, section T1 is 10 seconds, section T2 is 15 seconds, section T3 is 10 seconds, and section T4 is 15 seconds.

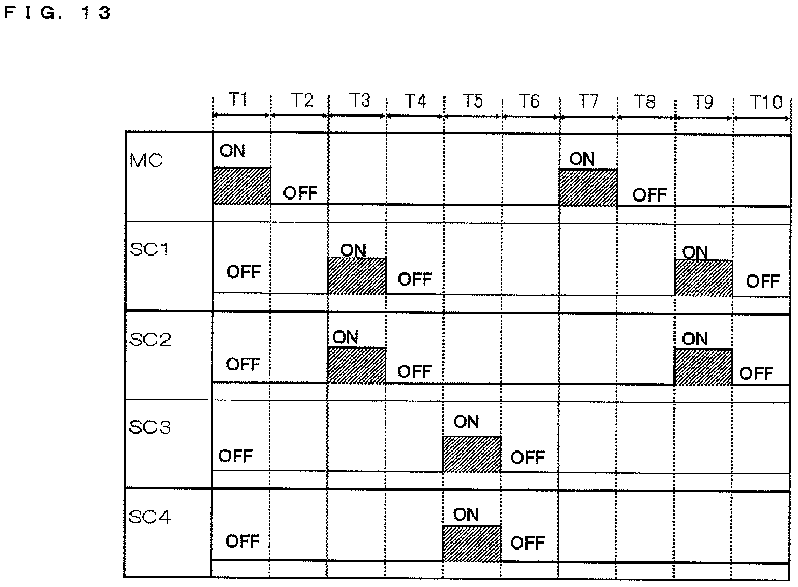

Although the operation to section T10 has been explained above, by providing further ten sections T11 to T20, the operation for sections T1 to T10 is performed again. By providing sections T1 to T20, for example, operations for the main heating coil MC and the first and second heating coils SC1 and SC2 in sections T1 to T4 are performed in section T11 to T14 in a manner similar to those in sections T1 to T4. Thus, the same conduction pattern is performed twice for the three heating coils. Similarly, section T21 and the subsequent sections may be provided. The same applies to conduction pattern examples described below and illustrated in Figs. 13, 15, 16, 18, 19, 20, 21, and 22. In the invention, cooking is not necessarily completed in sections T1 to T10, and similar operations may be performed in a repetitive manner after T11. In contrast, cooking operation may be terminated at a stage of T5.

As is clear from Fig. 10, in the first conduction pattern, after any of the main heating coil MC and the sub-heating coils SC1 to SC4 enters the ON state, an OFF period needs to be provided. By providing the OFF period, an object being cooked is cooled down. By the cooling down, flavor can be soaked and burning can be prevented.

Furthermore, the timing at which currents flow to the main heating coil MC and the sub-heating coils SC1 to SC4 in Fig. 10 is in the order of the main heating coil MC, sub-heating coil SC1, the sub-heating coil SC2, the sub-heating coil SC3, and the sub-heating coil SC4. However, the above-mentioned order may be changed. For example, heating may be performed in the order in which the ON timing of the sub-heating coils is determined on the basis of opposing coils, as in the order of the main heating coil MC, the sub-heating coil SC1, the sub-heating coil SC4, the sub-heating coil SC2, and the sub-heating coil SC3.

In addition, it is said that burning is likely to occur when the temperature of the bottom of a pot reaches about 140 degrees C. Thus, in the case where the temperature sensing circuit 31 senses a specific temperature during the operation under the burning suppression control, the heating power of the main heating coil MC and the sub-heating coils SC1 to SC4 may be reduced.

### (Variation 1 of a pair of sub-heating coils) (second conduction pattern)

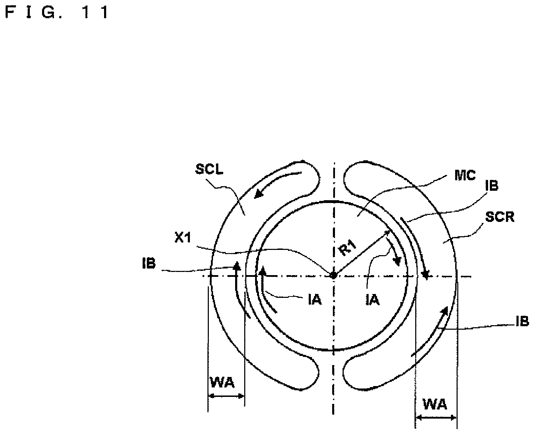

As illustrated in Fig. 11, the four sub-heating coils SC1 to SC4 may be regarded as two sub-heating coils SCL and SCR and heating may be performed in the order of the main heating coil, the sub-heating coil SCL, and the sub-heating coil SCR.

### (Third conduction pattern) (variation 2 of a pair of sub-heating coils)

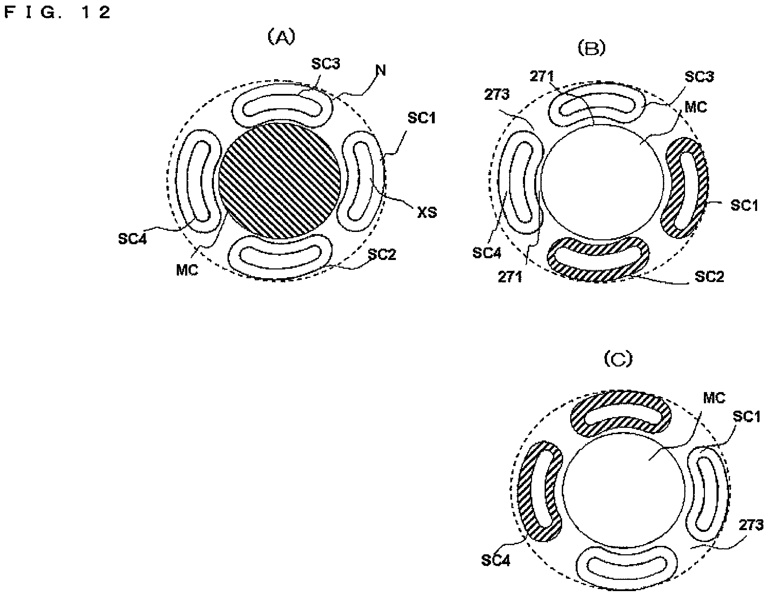

As illustrated in Figs. 12 and 13, the four sub-heating coils SC1 to SC4 may be divided into two pairs, for example, a first pair including the sub-heating coils SC1 and SC2, which are adjacent to each other, and a second pair including the sub-heating coils SC3 and SC4, which are adjacent to each other. In the case where six sub-heating coils exist, a third pair is also provided. By providing a dedicated inverter circuit to each of the pairs, the number of inverter circuits for driving the sub-coils can be reduced to half with respect to the total number of sub-coils. However, in the case where two sub-heating coils are driven by a single inverter circuit, in order to drive one of the sub-heating coils and not to drive the other sub-heating coil, switching means is required to be provided.

### (Fourth conduction pattern) (variation 3 of a pair of sub-heating coils)

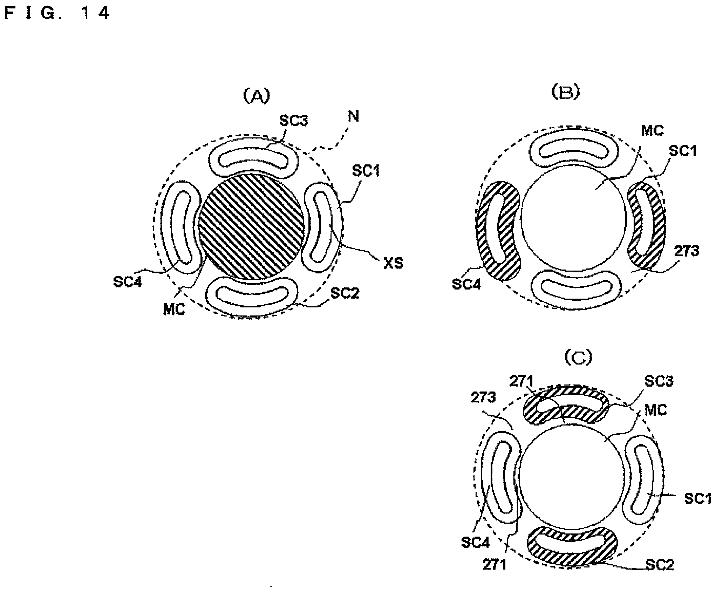

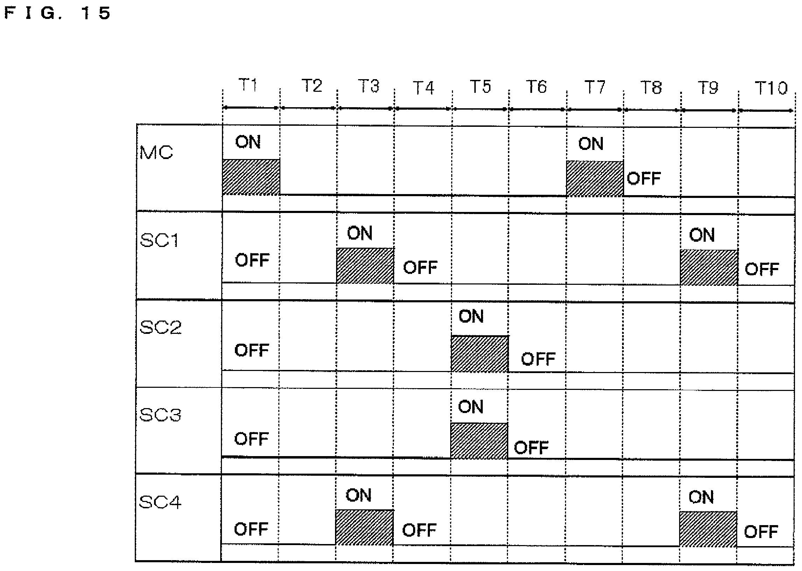

As illustrated in Figs. 14 and 15, by regarding the four sub-heating coils SC1 to SC4 as two pairs, for example, sub-heating coils that face each other may be defined as a pair, such as a pair of the sub-heating coils SC1 and SC4 and a pair of sub-heating coils SC3 and SC2. In the case where the number of sub-heating coils is an even number greater than four, such as six, three sub-heating coils may be defined as one pair, the remaining three sub-heating coils may be defined as the other pair.

### (Convection acceleration control)

Next, convection acceleration control, which is a feature of the invention, will be explained. The convection acceleration control is roughly classified into three types. In the case where a temperature sensor detects that the temperature of a target object N has increased, for example, up to 98 degrees C (or 100 degrees C) after the boil is reached or immediately before the boil is reached or in the case where the conduction control circuit 200 determines, on the basis of the elapsed time from start of cooking, that a boiling state will be entered soon, it is desirable that convection acceleration control is started at a time instructed by a user in a desired manner after the above-mentioned detection result is obtained, for example, immediately after operation is performed. However, for a particular cooking menu, after the boiling state is entered, the convection acceleration control may be automatically entered unless the user inhibits the convection acceleration control or heating is stopped during the process.

### (First convection acceleration control)

In this control, during the period in which the main heating coil MC is not operating, a target object N is heated by all the sub-heating coils SC1 to SC4.

Fig. 3(B) illustrates the state in which only the main heating coil MC is supplied with high-frequency current from the main inverter circuit MIV and is driven for heating.

In this case, a heating area for the target object N is a portion immediately above the main heating coil MC. Thus, based on the heating area, for example, the broth of food being cooked, which is contained in the target object N, is heated in the portion immediately above the main heating coil MC, and ascending air currents are generated. Thus, by continuing this state, outward convections can be generated, as represented by arrows YC in Fig. 3(B). Accordingly, ingredients are covered with the broth. In addition, the heating power of the main heating coil MC is set within a range from weak to strong level such as about 300 W to 1500 W.

Similarly, Fig. 3(A) illustrates the state in which all the sub-heating coils SC1 to SC4 are supplied with high-frequency currents from the sub-inverter circuits SIV1 to SIV4. In this case, a heating area for a target object N is a portion immediately above the sub-heating coils SC1 to SC4 and spaces between the sub-heating coils SC1 to SC4. Thus, based on the heating area, for example, the broth of food being cooked, which is contained in the target object N, is heated in the portion immediately above the sub-heating coils SC1 to SC4 and the spaces between the sub-heating coils SC1 to SC4, and ascending currents are generated. By continuing this state, inward convections can be generated as represented by arrows YC in Fig. 3(A). Accordingly, the ingredients are covered with the broth. In addition, the total sum of the heating powers of the sub-heating coils SC1 to SC4 is set within a range from weak to strong level, such as about 300 W to 1500 W.

By alternately applying heating power to the main heating coil MC and the sub-heating coils SC1 to SC4, even if heating is performed at a heating power between weak and strong levels, the temperature of the bottom of a pot can be prevented from locally increasing. Thus, burning can be suppressed. Furthermore, by alternately applying heating power to the main heating coil MC and the sub-heating coils SC1 to SC4, the broth can evenly cover the food being cooked. Thus, the broth can be absorbed even if a user does not stir the food being cooked. For cooking of food like boiled fish or simmered meat and potato (hereinafter, referred to as "meat and potato"), stirring the ingredients during cooking causes the ingredients to fall apart. However, under the control, the ingredients can be suppressed from falling apart.

### (Fifth conduction pattern)

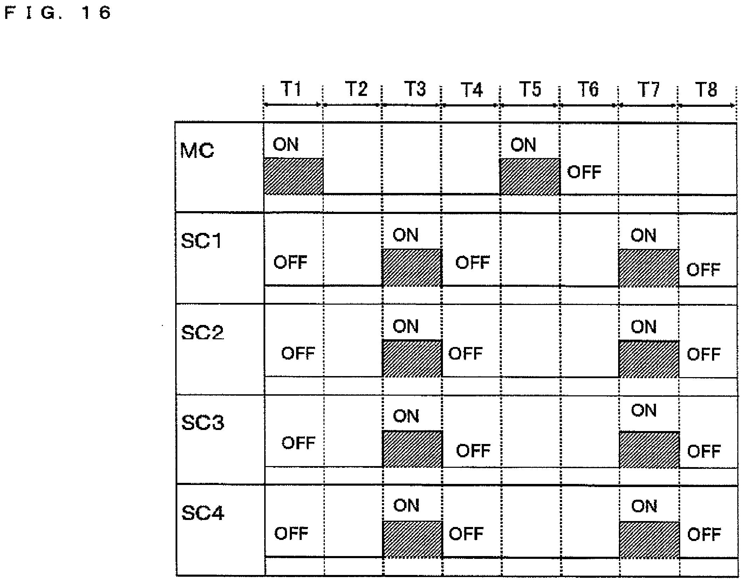

Fig. 16 is an explanatory diagram illustrating the timing at which currents flow to the main heating coil MC and the sub-heating coils SC1 to SC4, with respect to the heating operation. In Fig. 16, the state in which high-frequency current driven for heating is applied is represented as "ON," and the OFF state in which high-frequency current is not applied is represented as "OFF."

As illustrated in Fig. 16, regarding a plurality of sections T1 o T8 having specific time intervals, the main heating coil MC is in the ON state in section T1, all the coils are in the OFF state in section T2, the sub-heating coils SC1 to SC4 are in the ON state in section T3, all the coils are in the OFF state in section T4, the main heating coil MC is in the ON state in section T5, all the coils are in the OFF state in section T6, the sub-heating coils SC1 to SC4 are in the ON state in section T7, and all the coils are in the OFF state in section T8.

Each of the sections T1 to T8 illustrated in Fig. 16 may be about 1 to 60 seconds. Subsequently, currents flowing to the main heating coil MC and the sub-heating coils SC1 to SC4 enter the ON or OFF state at specific time intervals. The state in which each section is about 1 to 60 seconds means two cases: a case in which each of the sections T1 to T10 is set at ten-second intervals, ten seconds, is also set for each of the sections T1 to T10 for the next control and a case where each of the sections T1 to T10 is set at ten-second intervals and a different period of time is set for each of the sections T1 to T10 for the next control. In the latter case, for example, all the sections T1 to T10 are each set to fifteen seconds. Sections T1 and T2 and sections T3 and T4 may be different from each other. For example, section T1 is 10 seconds, section T2 is 15 seconds, section T3 is 10 seconds, and section T4 is 15 seconds.

As is clear from Fig. 16, after any of the main heating coil MC and the sub-heating coils SC1 to SC4 enters the ON state, an OFF period needs to be provided. By providing the OFF period, an object being cooked is cooled down. By the cooling down, flavor can be soaked, and burning can be prevented.

### (Second convection acceleration control)

In this control, although heating is performed using the main heating coil MC and the sub-heating coils SC1 to SC4 at the same time, a difference in the driving electric power is made between the main heating coil MC and the sub-heating coils SC1 to SC4. That is, an electric power that is smaller than induction heating electric power supplied to the main heating coil MC is supplied to each of the sub-heating coils SC1 to SC4, the induction heating electric power supplied to each of the sub-heating coils SC1 to SC4 is increased, an electric power that is smaller than the induction heating electric power is supplied to the main heating coil MC, and the above-mentioned operations are repeatedly performed a plurality of times.

### (Sixth conduction pattern)

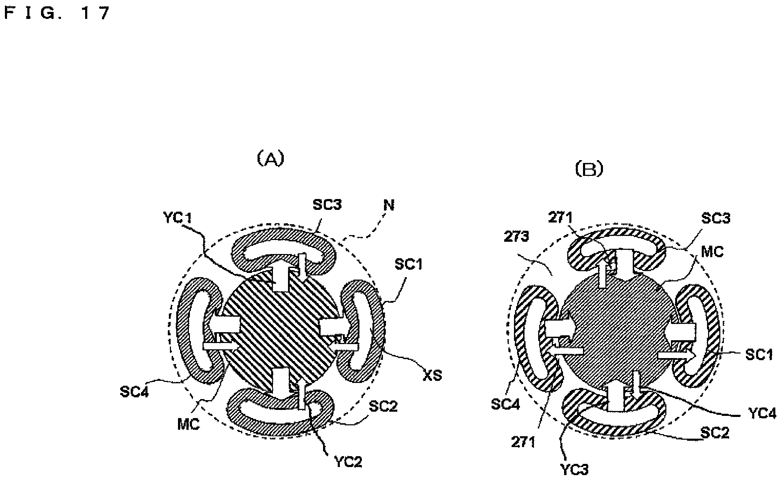

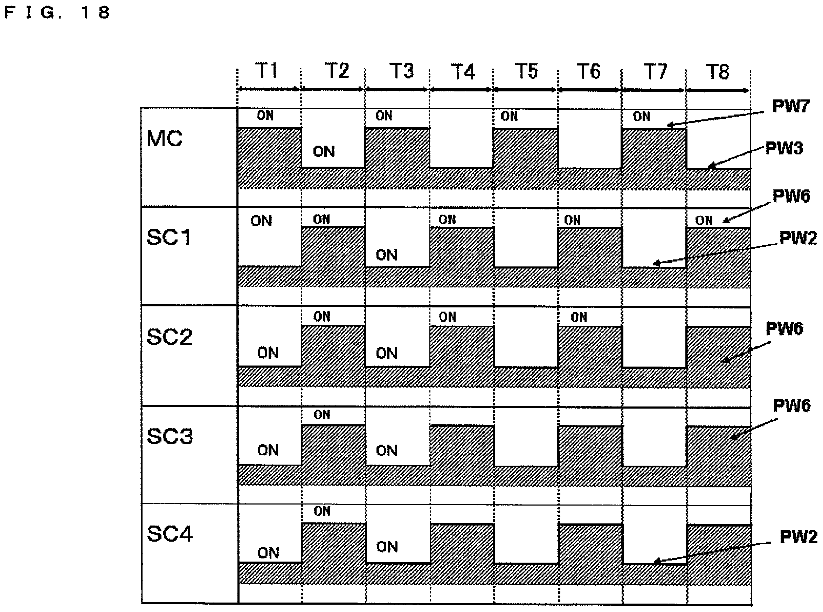

Fig. 17(A) illustrates the state in which the main heating coil MC and the sub-heating coils SC1 to SC4 are supplied with high-frequency currents at the same time from the inverter circuits MIV and SIV1 to SIV4 and are driven for heating. In this case, the magnitudes of heating powers set for the individual coils are illustrated in Fig. 18. That is, the case where the magnitude of heating power is set to "the heating power of the main heating coil MC > the heating power of each of the sub-heating coils SC1, SC2, SC3, and SC4" will be explained.

In the case where the magnitude of heating power set for the main heating coil MC is set to be greater than each of the heating powers of the sub-heating coils SC1 to SC4 as described above, when two or more sub-heating coils are driven at the same time, the total sum of heating powers of the sub-heating coils is greater than the heating power of the main heating coil MC.

In this heating pattern, a heating area for a target object N is a portion immediately above the main heating coil MC and immediately above the sub-heating coils SC1 to SC4 and spaces between the sub-heating coils. At this time, since the heating power of the main heating coil MC is greater than the heating power of each of the sub-heating coils SC1 to SC4, heating is performed in the portion immediately above the main heating coil MC, and currents ascending in an YC1 direction are generated. If noodle such as udon is boiled using only the main heating coil MC, outward convections in the YC1 direction continue to be generated, and boiling over occurs. However, by applying heating power to the sub-heating coils SC1 to SC4 at the same time, inward convections in an YC2 direction occur, and the outer convections in the YC1 direction can be slightly suppressed. Accordingly, boiling over can be suppressed.

Referring to Fig. 18, the main heating coil MC is driven (ON) in section T1. When the heating power is set to PW7, the heating power of each of the four sub-heating coils SC1 to SC4 driven in the same section T1 is PW2, which is smaller than PW7.

In the next section T2, the main heating coil MC continues to be driven (ON), and the heating power is changed from PW7 into PW3, which is smaller than PW7. Meanwhile, the heating power of each of the four sub-heating coils SC1 to SC4 that continue to be driven in section T1 is changed from PW2 into PW6, which is greater than PW2. Thus, a sub-heating coil, for example, SC1 is driven at PW6, which is greater than the heating power PW3 of the main heating coil MC. Furthermore, the sub-heating coils SC2 to SC4 are also driven at the same time, the total heating power (total sum of heating powers) of the four sub-heating coils SC1 to SC4 is obviously several times greater than the heating power PW3 of the main heating coil MC.

Subsequently, in section T3, the main heating coil MC and the four sub-heating coils SC4 to SC4 are driven at the same time at the same heating powers as section T1, and in the next section, driving is performed in the same manner as section T2. Subsequently, the driving patterns in sections T1 and T2 are repeated.

Fig. 17(B) illustrates the state in which the main heating coil MC and the sub-heating coils SC1 to SC4 are supplied with high-frequency currents at the same time from the inverter circuits MIV and SIV1 to SIV4 and are driven for heating. In this case, the heating powers for the main heating coil MC and the sub-heating coils SC1 to SC4 are set to "the main heating coil MC < the sub-heating coils SC1, SC2, SC3, and SC4". That is, the magnitude of heating power set for the main heating coil MC is smaller than each of the heating powers set for the four sub-heating coils SC1 to SC4. Furthermore, the heating power of the main heating coil MC is much smaller than the total sum of heating powers of the four sub-heating coils (sections T2, T4, and the like in Fig. 18).

In this case, a heating area for a target object N is a portion immediately above the main heating coil MC and immediately above the sub-heating coils SC1 to SC4 and spaces between the sub-heating coils. At this time, since the heating power of each of the sub-heating coils SC1 to SC4 is strong, heating is performed in the portion immediately above the sub-heating coils SC1 to SC4 and ascending currents in an YC3 direction are generated. When noodle such as udon is boiled using only the sub-heating coils SC1 to SC4, inward convections in the YC3 direction continue to be generated. Thus, boiling over occurs. However, by applying heating power to the main heating coil MC at the same time, outward convections in an YC4 direction occur. Thus, the inward convections in the YC3 direction can be slightly suppressed, and boiling over can be suppressed.

As described above, by repeating the operations for sections T1 and T2 a plurality of times, boiling over occurring in cooking of noodle such as udon can be suppressed. The number of repetitions and the time intervals, that is, the length of each of the sections T1 to T4, is determined in accordance with a control program built in the conduction control circuit 200.

In addition, in the case where the temperature sensing circuit 31 senses a specific temperature during the second convection acceleration control, if boiling over is electrically detected after the sensing, an operation for reducing the heating power of the main heating coil MC and the sub-heating coils SC1 to SC4 or an operation for turning OFF the heating power may be performed. Since various methods for detecting boiling over have been proposed, explanation of those methods will be omitted.

### (Variation 1 of allocation of heating powers to heating coils)

Heating may be performed in such a manner that heating powers are allocated to heating coils as "the main heating coil MC > the total sum of heating powers of the sub-heating coils SC1 to SC4" and then "the main heating coil MC < the total sum of heating powers of the sub-heating coils SC1 to SC4".

### (Preheating control) (seventh conduction pattern)

In this control, the main heating coil MC and the sub-heating coils SC1 to SC4 are driven and heated at the same time (at relatively large heating powers), and a difference in the driving electric power is made between the main heating coil MC and the sub-heating coils SC1 to SC4. In addition, after the temperature sensing circuit 31 senses a specific temperature, the driving electric powers (total sum of heating powers) of the main heating coil MC and the sub-heating coils SC1 to SC4 are reduced.

Fig. 17(A) illustrates the state in which the main heating coil MC and the sub-heating coils SC1 to SC4 are supplied with high-frequency currents at the same time from the inverter circuits MIV and SIV1 to SIV4 and are driven for heating. In this case, the magnitude of heating power is set in such a manner that the heating power of the main heating coil MC is smaller than or equal to the total sum of heating powers of the four sub-heating coils SC1 to SC4 in the first section and the main heating coil MC and the sub-heating coils SC1 to SC4 are driven at the same time.

By continuing the heating described above, a heating area for a target object N is a portion immediately above the main heating coil MC and immediately above the sub-heating coils SC1 to SC4 and spaces between the sub-heating coils. In the case where the heating power of the main heating coil MC is equal to or greater than the total sum of heating powers of the sub-heating coils SC1 to SC4, the heated temperature of the portion immediately above the sub-heating coils SC1 to SC4 and the spaces between the sub-heating coils is lower than the temperature of the portion immediately above the main heating coil MC. Thus, there is a concern that enough preheating is not performed for an outer portion of a frying pan and good baked color is not added to food being cooked. Thus, in this preheat control, in a section after the temperature sensing circuit 31 senses a specific temperature, the total sum of heating powers of the sub-heating coils SC1 to SC4 is controlled to be equal to or greater than the heating power of the main heating coil MC. These sections serve as preheating and keep-warm sections, in which degradation in the pan caused by overheating is prevented, and the pan can be preheated to a temperature suitable for omelet, hamburger, dumpling, and the like.

Furthermore, in the case where the temperature sensing circuit 31 senses an abnormal temperature glide during the operation in the preheating and keep-warm sections, in order to avoid firing, the heating power of the main heating coil MC and the sub-heating coils SC1 to SC4 may be reduced or turned OFF.

### (Third convection acceleration control) (eighth conduction pattern)

In this control, the main heating coil MC and the sub-heating coils SC1 to SC4 are heated at the same time. After the temperature sensing circuit 31 senses a specific temperature, a difference in the driving electric power is made between the main heating coil MC and the sub-heating coils SC1 to SC4.

The case where the induction heating unit is configured to include a circular main heating coil MC and four flat-shaped sub-heating coils SC1 to SC4 and these heating coils are driven as illustrated in Fig. 1 or the case where the induction heating unit is configured to include two sub-heating coils SCL and SCR, which have symmetrical shapes arranged on sides across a main heating coil MC, as illustrated in Fig. 11 is possible. An explanation will be provided on the assumption of the configuration of the latter case.

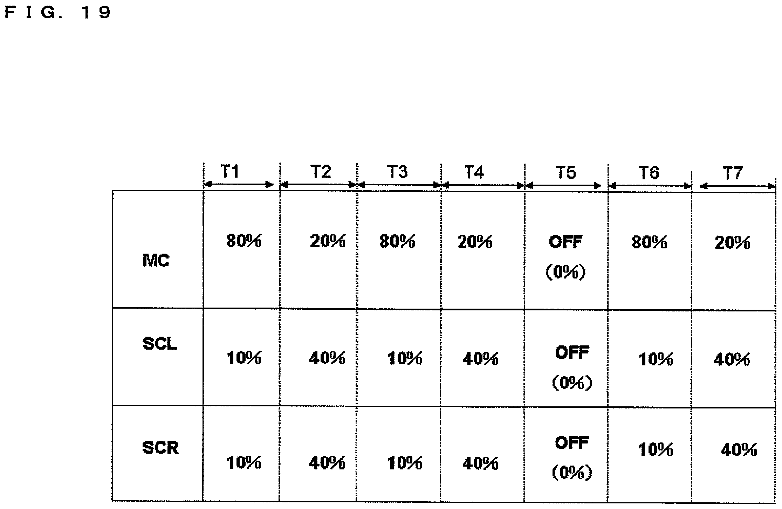

The percentages illustrated in Fig. 19 represent the percentages of individual heating powers of the main heating coil MC and the two flat-shaped sub-heating coils SCL and SCR with respect to the total sum of heating powers applied to the first induction heating unit 6L in individual sections T1 to T7 (T8 and later sections are omitted). For example, in the case where the total sum of heating powers in section T1 is 2000 W, since the value for the main heating coil MC is 80%, 1600 W is obtained. Furthermore, since the value for each of the two sub-heating coils SCL and SCR is 10%, 200 W is obtained. That is, the main/sub heating power ratio is 4:1.

In the case where the temperature sensing circuit 31 senses a specific temperature, for example, 98 degrees C (or 100 degrees C) as the temperature of a target object N, the conduction control circuit 200 makes a difference in the driving electric power between the main heating coil MC and the sub-heating coils SCL and SCR, as in section T1.

Next, in section T2, the magnitude of the total sum of the heating powers of the two sub-heating coils SCL and SCR and the main heating coil MC, that is, the main/sub heating power ratio, is set to 1:4, which is reversed to that in section T1. The heating power percentage of the main heating coil MC is set to 20%, and the heating power percentage of each of the sub-heating coils SCL and SCR is set to 40%. Next, in section T3, the same state as section T1 is entered again. In section T4, driving is performed in the same state as section T2. In section T5, driving of the main heating coil MC and all the sub-heating coils SCL and SCR pauses. This pause period is effective for a particular case where a large amount of fluid, for example, high-viscosity fluid, such as stew, soup, or curry, or fluid whose density is higher than water, is contained in a deep pot. That is, by not continuously heating but pausing for a short period of time, the flow of fluid temporarily stops during the pause period, and in a stable state a convection in the opposite direction is likely to occur. In this example, ascending currents centered on the main heating coil MC toward the portion immediately above the main heating coil MC in a central position are first generated (when the main heating coil MC is in the ON state), and then ascending currents toward the portion immediately above the sub-heating coils SCL and SCR are generated (when the sub-heating coils are in the ON state).

Although section T5, which is a pause section, is provided after sections T1 to T4 in Fig. 19, a pause section like section T5 may be provided after operations of sections T1 and T2 are repeatedly performed a plurality of times. Furthermore, the interval (time) of each of the sections T1 and T2 is not necessarily the same as that of each of the subsequent sections T3, T4, T5 and so on. Since section T5 in which driving pauses is, for example, several seconds, section T5 has a negligible influence on prolonging the entire cooking time.

Furthermore, in the configuration using four sub-heating coils having equivalent rated heating capacity, in the example illustrated in Fig. 19, for example, the heating power percentage of each of the first sub-heating coil SC1 and the second sub-heating coil SC2 in section T1 may be set to 5%, the heating power percentage of each of the third sub-heating coil SC3 and the fourth sub-heating coil SC4 in section T1 may be set to 5%. With this configuration, the ring-shaped main heating coil MC, the flat-shaped four sub-heating coils SC1 to SC4 that are arranged adjacent to side portions of the main heating coil and that each have a width smaller than the radius of the main heating coil, the inverter circuits MIV and SIV1 to SIV4 that supply induction heating power to the main heating coil MC and all the sub-heating coils SC, the control unit (conduction control circuit) 200 that controls output of the inverter circuits, and the operation means E for issuing at least either one of an instruction for a heating operation or a condition to the conduction control circuit 200 are provided. The conduction control circuit 200 supplies an electric power (80% of the entire electric power) that is greater than the total sum of electric powers (20% of the entire electric power) supplied to the first to fourth sub-heating coils is supplied from the inverter circuit MIV to the main heating coil MC in section T1. In the next section T2, the conduction control circuit 200 increases the induction heating electric power supplied to the first to fourth sub-heating coils SC1 to SC4 (increased to 80% of the entire electric power), and an electric power (20% of the entire electric power) that is smaller than the total sum of electric powers supplied to the first to fourth sub-heating coils is supplied from the main inverter circuit MIV to the main heating coil MC. Then, the conduction control circuit 200 repeats the conduction switching operations illustrated in sections T1 and T2 for the main heating coil MC and the sub-heating coils SC1 to SC4 a plurality of times. Accordingly, after the target object N has reached a specific temperature (for example, a point in time when a boiling state is entered), generation of convection in fluid such as water or broth in the target object N can be accelerated.

### (Second burning suppression control)

Next, second burning suppression control will be explained. In the case where the temperature sensing circuit 31 detects that the temperature of a target object N has increased, for example, up to 98 degrees C (or 100 degrees C) after the boil is reached or immediately before the boil is reached or in the case where the conduction control circuit 200 determines, on the basis of the elapsed time from start of cooking, that a boiling state will be entered soon, it is desirable that burning suppression control is started at a time instructed by a user in a desired manner after the above-mentioned detection result is obtained, for example, immediately after operation is performed. However, for a particular cooking menu, after the boiling state is entered, the burning suppression control may be automatically entered unless the user inhibits the burning suppression control or heating is stopped during the process.

In this control, the main heating coil MC and the sub-heating coils SC1 to SC4 are heated at the same time. However, after the temperature sensing circuit 31 senses a specific temperature, driving electric power of each of the main heating coil MC and the sub-heating coils SC1 to SC4 is reduced.

### (Ninth conduction pattern)

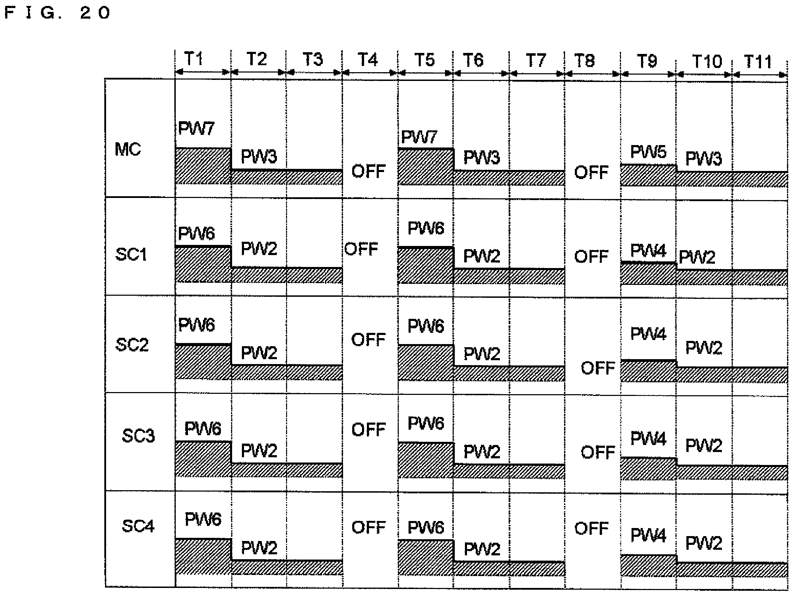

The case where the induction heating unit is configured to include a circular main heating coil MC and four flat-shaped sub-heating coils SC1 to SC4 and these heating coils are driven as illustrated in Fig. 1 or the case where the induction heating unit is configured to include two sub-heating coils SCL and SCR, which have symmetrical shapes arranged on sides across a main heating coil MC, as illustrated in Fig. 11 is possible. An explanation will be provided with reference to Fig. 20 on the assumption of the configuration of the former case.

In Fig. 20, reference signs PW2 to PW7 each represent heating power. However, for different coils, the number does not necessarily represent the magnitude of heating power value. For example, regarding PW7 for the main heating coil MC and PW6 for the sub-heating coil SC1 to SC4, PW7 may represent a heating power greater than, equal to, or smaller than PW 6. However, for the same coil, PW3 represents a heating power greater than PW2, and the heating power increases as the number increases, such as PW 3, PW4, and so on.

In the case where the temperature sensing circuit 31 senses, as the temperature of a target object N, a specific temperature such as 98 degrees C, the conduction control circuit 200 drives the main heating coil MC at PW7, which is a first heating power, as in section T1, and at the same time, drives each of the sub-heating coils SC1 to SC4 at PW6, which is a second heating power. PW7 is set to, for example, 700 W, and PW6 is set to, for example, 600 W. Accordingly, the main/sub heating power ratio in section T1 is 7:24.

In section T2, the heating power of the main heating coil MC is changed from the first heating power PW7 to the third heating power PW3. PW3 is, for example, 300 W. At the same time, the heating power of each of the four sub-heating coils SC1 to SC4 is changed from the second heating power PW6 to the fourth heating power PW2. PW 2 is, for example, 200 W. Accordingly, the main/sub heating power ratio in section T2 is 3:8.

In section T3, driving is performed at main and sub heating powers similar to section T2. Furthermore, in section T4, driving of the main heating coil MC and all the sub-heating coils SC1 to SC4 pauses.

Then, in sections T5 to T8, the same conduction patterns and heating powers as section T1 to T4 are repeated. In the subsequent sections, the operations in sections T1 to T4 may be repeated. In the embodiment illustrated in Fig. 16, however, in section T9, the heating power of the main heating coil MC is changed from the first heating power PW7 into a smaller heating power PW5 (however, greater than the third heating power PW3). PW5 is, for example, 500 W. At the same time, the heating power of each of the four sub-heating coils SC1 to SC4 is changed from the second heating power PW6 into a smaller heating power PW4 (however, greater than the fourth heating power PW2). PW4 is, for example, 400 W. Accordingly, the main/sub heating power ratio is 5:16 in section T9.

In sections T10 and T11, driving is performed as in section T2. Due to the concern that the lapse of sections T1 to T8 (the number of sections may be greater than this) gradually reduces the water content ratio of an object being cooked in a target object N such as a pot and burning occurs in the case where heating is performed at the same heating power for the same period of time, the heating power of the main heating coil and the sub-heating coils is slightly reduced in section T9. That is, as described in this embodiment, reducing heating power and shortening the period of a section, which is not illustrated, are effective for suppressing burning.

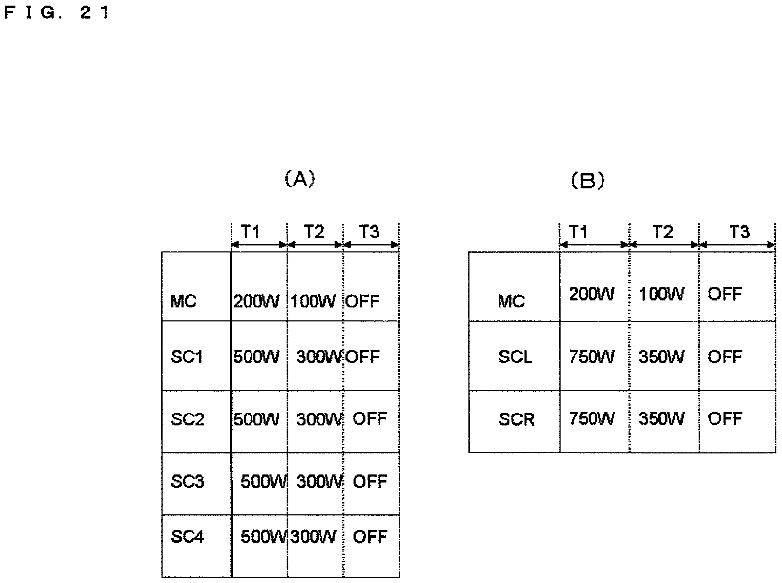

In Fig. 21(A), specific heating power values of the main heating coil MC and the four flat-shaped sub-heating coils SC1 to SC4 are represented using wattage (W), on the basis of the idea illustrated in Fig. 20. As is clear from Fig. 21(A), in section T1, the main heating coil MC is driven at the first heating power W7, which is 200 W, and the four sub-heating coils SC1 to SC4 are driven at the second heating power W6, which is 500 W. In section T2, the heating power is changed from the first heating power PW7, which is 200 W, to the third heating power PW2, which is 100 W, and the heating power of each of the four sub-heating coils SC1 to SC4 is reduced from the second heating power PW 6 (500 W) to the fourth heating power, which is 300 W.

In Fig. 21(B), the heating powers when the two sub-heating coils SCL and SCR arranged on sides across the main heating coil MC are driven as illustrated in Fig. 11 are represented using wattage (W), on the basis of the idea illustrated in Fig. 20.

As is clear from Fig. 21(B), in section T1, the main heating coil MC is driven at the first heating power PW7, which is 200 W, and each of the two sub-heating coils SCL and SCR is driven at the second heating power PW6, which is 750 W. In section T2, the heating power is changed from the first heating power PW7, which is 200 W, into the third heating power, which is 100 W and the main heating coil MS is driven, and the heating power of each of the two sub-heating coils SCL and SCR is reduced from the second heating power PW6 (750 W) to the fourth heating power PW2, which is 350 W and each of the two sub-heating coils SCL and SDR is driven.

The values of the second heating power PW6 and the fourth heating power PW2 are not the same between Fig. 21(A) and Fig. 21(B). This is mainly because the sizes of sub-heating coils differ from each other. Furthermore, the first to fourth heating powers vary depending on the size, material, production method, and the like for the main heating coil MC and the sub-heating coils SC1 to SC4, and the explanation provided above is merely an example.

### (Tenth conduction pattern)

Fig. 22 illustrates the actual wattage in sections T1 to T11. In section T1, since the heating power of the main heating coil MC is 800 W and the heating power of each of the four sub-heating coils SC1 to SC4 is 175 W, the total sum of heating powers in section T1 is 1500 W. Also in section T3, the total sum of heating powers is 1500 W, and the total sum of heating powers in each of the subsequent sections T3 to T11 is 1500 W. Thus, in section T1, since the main/sub heating power ratio is 800 W to 700 W (175 W × 4), 8:7 is obtained. In section 2, a main/sub heating power ratio of 7:8, which is reversed the main/sub heating power ratio in section T1, is obtained.

Furthermore, sections T1 to T11 have periods as illustrated in a lower portion of Fig. 22. Only the initial section T1 is long, such as 60 seconds, and section T2, in which heating pauses, is 2 seconds. The subsequent heating and driving sections T3, T5, T7, T9, and T11 each have 20 seconds, and heating pause periods T4, T6, and so on each have 2 seconds.

In the explanation of the conduction patterns (first to tenth conduction patterns) for the main heating coil MC and the sub-heating coils SC1 to SC4, SCL, and SCR, even when a physically small amount of conduction occurs in the main heating coil MC and the sub-heating coils SC1 to SC4, SCL, and SCR, the state in which the conduction is at a level at which induction heating is not enough for performing substantial induction heating cooking for a target object N is called the state in which "driving is not performed" ("OFF" state) in the invention. That is, the OFF state does not necessarily mean the state in which conduction is not performed. For example, the case where a small amount of current through which the current detection unit 280 is capable of detecting current flowing in a heating coil flows in order to implement the function of the object-to-be-heated placement determination unit 400 is called the OFF state.

The display screen 100 of the display means G will now be explained.

In Figs. 23 to 25, the display screen 100 is activated when at least one of the first induction heating unit 6L, the second induction heating unit 6R, and the radiation-type central electrical heating unit 7 is used.

Fig. 23 illustrates the state immediately before a cooking menu is selected for the first induction heating unit 6L.

As illustrated in Fig. 23, in the case where the operation key 50 for the main power switch is pressed and then a selection operation for using the first induction heating unit 6L is performed, the screen illustrated in Fig. 23 is first displayed. That is, for selection of a cooking menu, seven keys: the selection key E1A for high-speed heating, the selection key E1B for water-boiling, the selection key E1C for boiling, the selection key E2Afor preheating, the selection key E2B for rice-cooking, the selection key E3A for frying, and the selection key E3B for water-boiling + keep warm, are collectively displayed (in a list format).

In Fig. 23, the seven keys E1A, E2A, E3A, and so on adopt contact keys for which touching of a key by a user's finger changes an electrostatic capacitance. When a user lightly touches a position corresponding to a key surface on the upper surface of the glass top plate 21 that covers the upper surface of the display screen 100, an input signal effective for the conduction control circuit 200 is generated.

That is, although characters, drawings, or the like representing key input functions are not printed, engraved, or the like on the surface of the top plate 21 configuring portions (sections) of the various input keys E1A, E2A, E3A, and so on, characters, drawings, or the like representing the key input functions are displayed below the keys on the display screen 100 for individual input key operation scenes.

All the input keys are not always displayed at the same time. For a key that is invalid for operation (input key for which operation is not needed), input function characters or drawings are not displayed on the display screen so as not to be viewed from above the top plate 21. A control program for defining the operation of the conduction control circuit 200 is defined in such a manner that an effective operation instruction signal is not transmitted to the operation means E even when an invalid input key is operated.

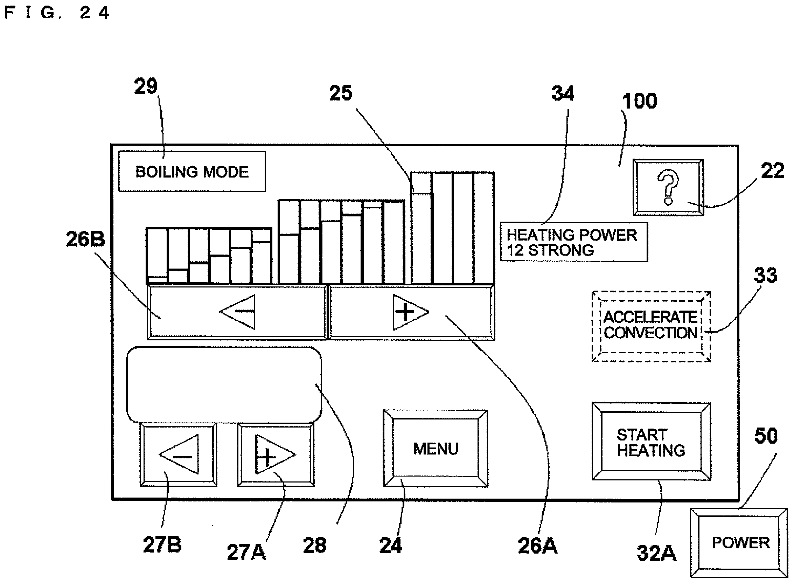

Fig. 23 illustrates a screen that first appears in the case where the first induction heating unit 6L provided at left is used. The screen urges a user to select a cooking menu. Here, if the user touches the selection key E1C for boiling, the display screen 100 is changed into the screen illustrated in Fig. 24.

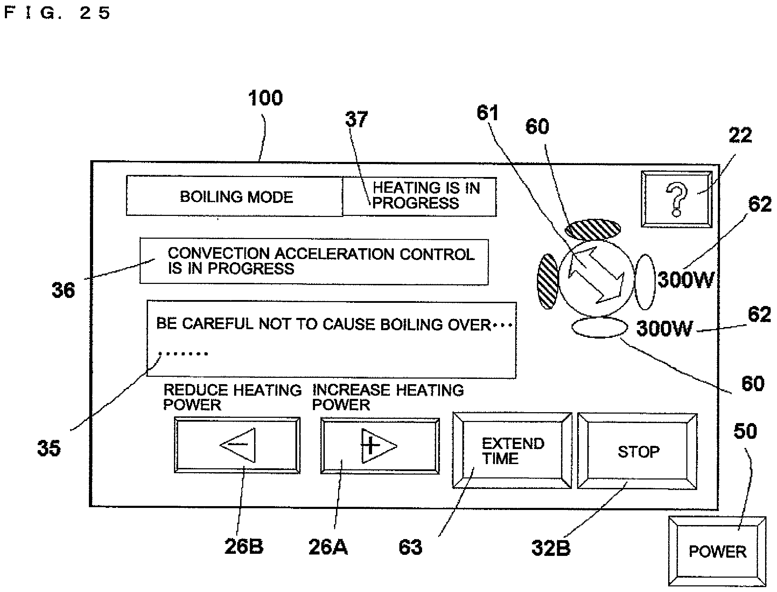

In Fig. 23, reference numeral 22 represents a help key. When a user operates the help key at the time the user does not figure out how to handle the operation or in the case where an alarm sound occurs or alarm characters appear on the display screen 100 by an incorrect operation, information relating to the scene is displayed using characters in a display area 35 illustrated in Fig. 25. Reference numeral 23 represents an information key, which displays information on a cooking vessel used, a cooking method, a note for good cooking, and the like, using characters in the display area 35.

In Fig. 24, reference numeral 24 represents a cooking menu selection key. When the user touches the cooking menu selection key 24 on the scene illustrated in Fig. 24, the screen returns to the scene illustrated in Fig. 23. Thus, the cooking menu selection key 24 is used in order to perform another cooking menu.

Reference numeral 25 represents a heating power display diagram representing the magnitude of heating power in the form of a bar graph, and sixteen bars are displayed in association with sixteen stages of heating power. Reference numerals 26A and 26B represent a pair of heating power adjustment keys. The key 26A with a plus sign is provided for increasing heating power, and the key 26B with a minus sign is provided for reducing heating power. When the user touches the key 26A or 26B once, the heating power is changed by one stage.

In Fig. 24, reference numeral 28 represents a time display part in which heating time is displayed in units of minutes, and reference numerals 27A and 27B represent adjustment keys for heating time. The adjustment key 27A with a plus sign is provided for increasing time, and the adjustment key 27B with a minus sign is provided for reducing time. When the user touches the adjustment key 27A or 27B once, the time is changed by one minute. Depending on the cooking menu, the cooking time is not necessarily displayed. Furthermore, in the case where a standard time is automatically displayed, adjustment can be made using the adjustment key 27A or 27B. The same applies to adjustment of heating power. For a cooking menu for which adjustment cannot be made (adjustment is not made), the adjustment keys 27A, 27B, 26A, and 26B are not displayed.

Reference numeral 29 represents a display part in which a cooking menu is displayed, reference numeral 34 represents a heating power display part in which heating power is displayed, and reference numeral 33 represents a key for issuing an instruction for convection acceleration control. The key is not always displayed. Depending on the cooking menu, the key is not displayed. For example, the key is not displayed for the rice-cooking mode. For "boiling", in the case where initial setting is made in such a manner that convection acceleration control is automatically performed after the boil is reached, the key 33 is not displayed. Reference numeral 32A represents a key for starting heating operation.

In the scene illustrated in Fig. 24, when the user touches the heating start key 32A for starting heating operation, the display is changed into a heating stop key 32B having a different function, as illustrated in Fig. 25. In Fig. 25, reference numeral 36 represents a display area in which reference information or the like is displayed using characters, reference numeral 35 represents a warning display area in which a warning item is displayed using characters in an appropriate manner for safety for users. Reference numeral 37 represents a name display part in which a cooking menu being executed is displayed.

When heating and cooking operation starts, a schematic figure 61 is displayed on the display screen 100 as illustrated in Fig. 25 in order to inform the user of the state in which the main heating coil MC and at least one of the four sub-heating coils SC1 to SC4 cooperate to perform heating. Furthermore, the value of heating power being applied is displayed as a number 62 at the same time. In addition, switching of conduction of the sub-heating coils is displayed using a figure as represented by an arrow 61. The shape, color, and the like of the above-mentioned display change in real time in accordance with the driving state (including the heating power state) of the main heating coil MC and the four sub-heating coils SC1 to SC4.

In order to stop heating, for example, the heating stop key 32B can be touched. When OFF operation is performed for the operation key 50 of the main power switch, display of the display screen 100 changes into heating stop display. Since the top plate 21 often keeps high temperature even after cooking ends, reporting of high temperature continues to be performed until the top plate 21 has reached a specific temperature or lower. Then, the display screen 100 automatically disappears. Thus, the various keys illustrated in Figs. 24 and 25 also disappear, and no operation signal is generated even if a position where a key was displayed is touched.

In Fig. 25, reference numeral 63 represents a time extension key. After cooking with heat starts, the time extension key 63 can be operated at any time. When the time extension key 63 is touched, the time display part 28 in which heating time is displayed in units of minutes and the adjustment keys 27A and 27B for heating time appear on the display screen 100, as illustrated in Fig. 24.

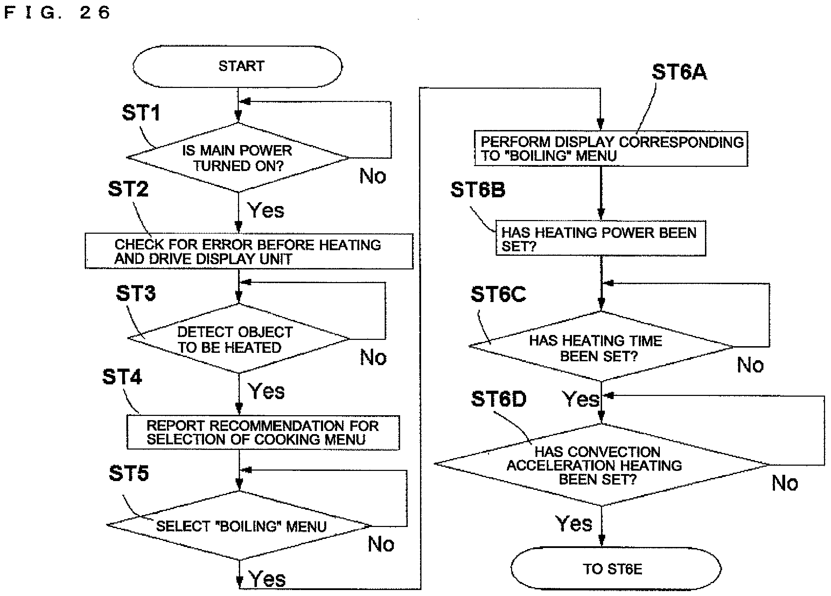

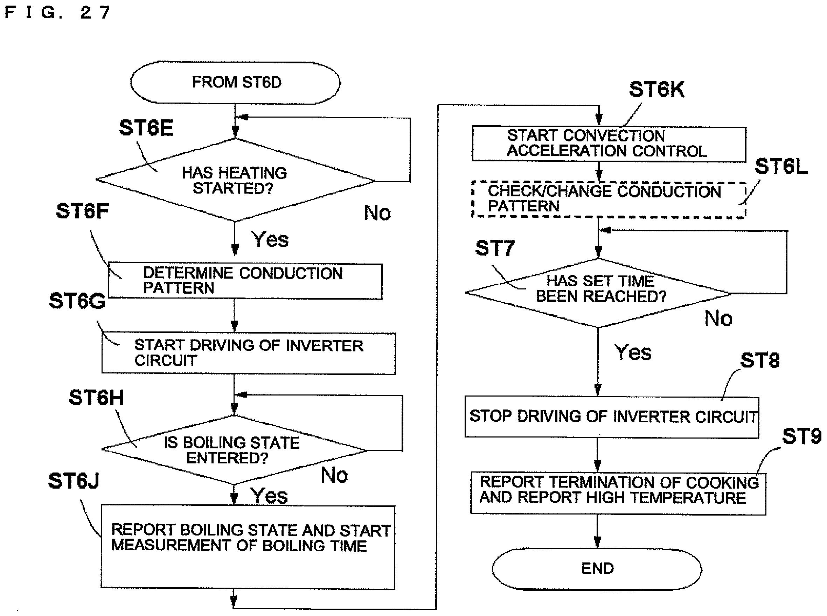

Next, an example of operation from start to completion of induction heating cooking will be explained with reference to Figs. 26 and 27. (Preparation stage before start of cooking)

In order to start cooking, the key 50 of the main power supply is operated, and the main power is turned on (step 1, hereinafter, step is abbreviated as "ST"). When a user issue an instruction for a heating preparation operation, a self-diagnostic program of the conduction control circuit 200 is activated. It is checked whether or not an error has occurred before heating, and the display means G is activated (ST2).

In the case where no error has occurred, the current detection unit 280 that configures the object-to-be-heated placement determination unit 400 estimates whether a target object N is placed above each of the main heating coil MC and the sub-heating coils SC or whether the area of the bottom of the target object N is greater than a specific value. The result of the estimation is transmitted to the conduction control circuit 200, which serves as a control unit (ST3).

In the conduction control circuit 200, determinations on whether heating processing suitable for a pot having a large diameter or heating processing suitable for a normal pot or the like are to be performed (a specific small amount of current is flowed to a heating coil, and a current sensor detects the result). In the case of a suitable pot having a normal size or a small size, a pot not suitable for being heated, and the like, processing different from processing for a pot having a large diameter is performed.

### (Cooking start stage)

As described above, preparation for transition to a cooking step for a pot having a large diameter is completed. After a cooking menu is selected, an induction heating operation starts quickly. Pans whose bottom diameter is about 120 mm to 180 mm are called "normal pots," and pots whose bottom diameter is smaller than 120 mm are called "small pots." Basically, for these pans, steps similar to the above-described steps are performed. The diameter mentioned here represents the diameter of the bottom of a pot that is in touch with the surface of the top plate 21. Thus, the diameter of the body of the pot is greater than this diameter.

For "normal pans" or "small pans," cooking menus such as "water-boiling" and "keep-warm" are displayed on the display screen 100. For "normal pots" or "small pots," since heating is performed only using the center main heating coil MC in Embodiment 1, the details of control (heating power, conduction pattern, etc.) are greatly different. Obviously, only all or some of the sub-heating coils SC cannot be individually driven, a heating pattern using a sub-heating coil SC does not exist. The screen illustrated in Fig. 23 is displayed on the display screen 100 and urges a user to select a cooking menu (ST4). In the case where a voice guidance device is also used, a voice guidance, such as "please select a heat source to be used," is presented in this stage.

A current sensor for the main heating coil MC and four current sensors for the sub-heating coils SC input basic information for determining whether the same target object N is placed above the main heating coil MC and each of the sub-heating coils to the current detection unit 280 configuring the object-to-be-heated placement determination unit 400. By detecting a change in current, the current detection unit 280 detects a change in the impedances of the main heating coil MC and the sub-heating coils SC. The main inverter circuit MIV for the main heating coil MC and the sub-inverter circuits SIV for the sub-heating coils SC above which a rectangular or elliptical pot (target object N) is placed are driven, and the conduction control circuit 200 issues instruction signals indicating that high-frequency current is flowed to (at least) one of the four sub-heating coils SC1 to SC4 above which the elliptical pot (target object N) is placed and that high-frequency current is suppressed or stopped for the other sub-heating coils above which the elliptical pot (target object N) is not placed.

For example, when the object-to-be-heated placement determination unit 400 determines that the same elliptical pot (target object N) is placed above the main heating coil MC and the sub-heating coil SC1, the conduction control circuit 200 operates the main heating coil MC and the particular sub-heating coil SC1 in cooperation with each other, and supplies high-frequency electric power at specific heating power percentages from the inverter circuits MIV and SIV1 to the two heating coils.

Here, the "heating power percentage" represents the "main/sub heating power ratio" as explained for the heating pattern illustrated in Fig. 22. For example, in the case where a user intends to start cooking at a heating power of 3000 W, when the conduction control circuit 200 performs allocation in such a manner that the heating power of the main heating coil MC is 2400 W and the heating power of the sub-heating coil SC1 is 600 W, the main/sub heating power ratio is represented as the ratio of 2400 W to 600 W. In this example, the main/sub heating power ratio is 4:1.

Only the sub-heating coil SC1 cannot be driven for induction heating cooking, and only each of the three sub-heating coils SC2, SC3, and SC4 or only some of the three sub-heating coils SC2, SC
3, and SC4 cannot be driven for induction heating cooking. In other words, only when the main heating coil MC is driven, one or more of the four sub-heating coils SC1, SC2, SC3, and SC4 can be driven for heating at the same time. If a target object N having an outer diameter that is large enough to cover all the four sub-heating coils SC1, SC2, SC3, and SC4 is placed, a control pattern for driving the four sub-heating coils is prepared in a control program for the conduction control circuit 200.

In the case where selection of a cooking menu is performed (ST5), for example, in the case where a menu for "boiling" is selected, the display screen 100 turns into the screen illustrated in Fig. 24 and urges the user to set control conditions necessary for boiling, for example, heating power and time (ST6A). In the case where the user sets a heating power (ST6B), sets a heating time (ST6C), and sets execution of convection acceleration control using the key 33 (ST6D), the cooking operation genuinely starts (ST6E). Thus, as illustrated in Fig. 27, the conduction control circuit 200 determines a conduction pattern (ST6F), and the inverter circuit 210L is driven (ST6G). In this conduction start stage, the conduction control circuit 200 starts to measure time.

As described above, for the boiling mode, a heating power can be set manually for the heating step (up to the boil).

That is, the boiling mode is a cooking menu in which priority is given to heating speed, and the user is able to select one stage within a range between 120 W and 3000 W, as the total sum of heating powers of the main heating coil MC and the sub-heating coils.

Over the entire heating step up to the boil, the main heating coil MC and the sub-heating coils SC1 to SC4 are driven at the same time, and it is controlled such that the directions of high-frequency currents in an area in which heating coils are adjacent to each other are made consistency to each other. Furthermore, after the boil is reached (unless the user performs an operation for inhibition), the "convection acceleration control" is automatically started. Since the default value of heating power is 2000 W, even in the case where the heating start key 32A is operated without the heating adjustment key 26A or 26B being operated, heating is started.

The main/sub heating power ratio is automatically determined by the conduction control circuit 200 so as to be within a specific range, and the user cannot set a desired main/sub heating power ratio.

After the boil is reached, the heating operation automatically continues to be performed at the default value (1500 W) so as to maintain the boiling state for the consecutive thirty minutes (extension is acceptable). However, the user may select a desired heating power after the boil. The heating power adjustment keys 26A and 26B are always capable of being operated (see Fig. 25). Even in the case where heating power is changed, the temperature sensing circuit 31 always monitors the temperature of the target object N. However, when a desired heating power is set, since a normal heating mode is entered, the conduction pattern illustrated in Fig. 22 is not performed.

As described above, if heating continues to be performed at a set heating power for a specific period of time as described above, water in the target object N becomes warm and eventually enters a boiling state. The conduction control circuit 200 senses a state regarding boiling on the basis of information from the temperature sensing circuit 31 and estimates that the boiling state is entered (ST6H), the entry to the boiling state is displayed on the display screen 100. In the case where a voice guidance device that cooperates with the display means G is also used, a voice guidance such as "water has come to the boil" or buzzer sound may be presented in this stage.

The conduction control circuit 200 also calculates the elapsed time from the point in time when heating starts (ST6E) to the point in time when the boiling state is detected (hereinafter, referred to as a "time required for the boil being reached", and stores the calculated time into a built-in semiconductor memory. Then, the subsequent time (hereinafter, referred to as an "elapsed time after the boil") is calculated. Although the heating power is automatically changed into 1500 W, when the temperature of the target object N suddenly reduces immediately after a vegetable or the like to be boiled is put, the operation of the temperature sensing circuit 31 increases the heating power. The boiling state is recovered, and the heating power is then maintained at 1500 W.

Then, for example, second convection acceleration control of the above-mentioned convection acceleration control starts (ST6K). In this control, although the main heating coil MC and the sub-heating coils SC1 to SC4 are driven at the same time as described above, a difference in the driving electric power is made between the main heating coil MC and the sub-heating coils SC1 to SC4. That is, an electric power that is smaller than the induction heating electric power supplied to the main heating coil MC is supplied to each of the sub-heating coils SC1 to SC4, the induction heating electric power supplied to each of the sub-heating coils SC1 to SC4 is increased, an electric power that is smaller than the induction heating electric power is supplied to the main heating coil MC, and the above-mentioned operations are repeated a plurality of times. In this control, as illustrated in Fig. 17(A), a heating area for a target object N is a portion immediately above the main heating coil MC and immediately above the sub-heating coils SC1 to SC4 and spaces between the sub-heating coils. At this time, since the heating power of the main heating coil MC is stronger than the heating power of each of the sub-heating coils, heating is performed in the portion immediately above the main heating coil MC, and ascending currents in the YC1 direction are generated. If noodle such as udon continues to be boiled only using the main heating coil MC, outward convections in the YC1 direction continue to occur and boiling over occurs. However, by applying heating power of the sub-heating coils SC1 to SC4 at the same time, inward convections in the YC2 direction occur, and the outward convections in the YC1 direction can be slightly suppressed. Thus, boiling over can be suppressed.

Then, it is determined whether or not the time set by the user is reached. In addition, it is determined whether or not the thirty minutes, as the "elapsed time after the boil", have passed (ST7), and it is checked whether an operation for extending time has not been performed (this step is not illustrated). In the case where the time is not extended, when thirty minutes or more as the "elapsed time after the boil" have passed, the inverter circuit 210L is stopped (ST8), the stop of heating is displayed on the display screen 100, and reporting of high temperature is performed (ST9).

In step ST6J mentioned above, the conduction control circuit 200 estimates whether a large amount of broth, water, or an ingredient such as a vegetable and meat exists in the pot as the target object N, on the basis of the length of the "time required for the boil" and the heating power values to the present time. For example, in the case where the "time required for the boil" is long even though a large pot is heated at 3000 W, since the conduction control circuit 200 stores data of the time required for, for example, increasing a liter of water at 20 degrees C to 100 degrees C at 3000 W, the conduction control circuit 200 estimates that a liquid of two liters or more is heated, on the basis of a comparison result. Since occurrence of burning or boiling over is concerned for such a large amount of broth, in order that the conduction control circuit 200 is capable of selecting a control method determined to be the most suitable method for the conditions, processing (ST6L) that is similar to the processing step (ST6F) for determining the conduction pattern may be added immediately after start of the convection acceleration control (ST6K). A change into a more suitable heating pattern may be made as required.

In contrast, the case where, for example, third convection acceleration control of the above-mentioned convection acceleration control starts after the boing state is entered will be explained.

In this control, similar to the above-mentioned tenth conduction pattern, the main heating coil MC and the sub-heating coils SC1 to SC4 are heated at the same time. However, after the temperature sensing circuit 31 senses a specific temperature, a difference in the driving electric power is made between the main heating coil MC and the sub-heating coils SC1 to SC4.

In the tenth conduction pattern, as illustrated in Fig. 22, in section T1, which is the first sixty seconds, it is controlled such that the main heating coil MC is heated at 800 W and each of the four sub-heating coils SC1 to SC4 is heated at 175 W. Thus, driving is performed with a total sum of heating powers of 1500 W. The next pause section T2 is two seconds. During this pause period, an object being cooked such as noodle or pasta moving in accordance with the convection generated in the target object N becomes stationary.

In the next section T3, the total sum of heating powers is 1500 W, and due to conduction for twenty seconds, the object being cooked starts to move again in accordance with the convection of hot water. Subsequently, after a pause period of two seconds, the heating driving operation is repeatedly performed at intervals of twenty seconds, at a total sum of heating powers of 1500 W, and a main/sub heating power ratio of 7:8.

Since the above-described intermittent heating operation is performed a several tens of times or more, a heating area for the target object N is a portion immediately above the main heating coil MC and immediately above the sub-heating coils SC1 to SC4 and spaces between the sub-heating coils. Since the heating power of the main heating coil MC is substantially equal to the heating power of the sub-heating coils, the heating effect of the main heating coil MC is stronger than the heating effect of the sub-heating coils SC1 to SC4 arranged around the main heating coil MC in a scattered manner. The center of the bottom of the target object N is strongly heated while the entire bottom of the target object N is heated, and ascending currents stronger than those of a peripheral area are generated in the central portion in the target object N. However, since the peripheral portion is also heated, development of foam that causes boiling over is suppressed in the peripheral portion of the target object N, that is, a portion near side surfaces of the pot, and the entire target object N can be heated efficiently. That is, boiling over can be suppressed.

The tenth conduction pattern illustrated in Fig. 22 may be changed to a pattern in which heating is performed by the main heating coil MC at a heating power of 800 W and only adjacent or facing two sub-heating coils of the four sub-heating coils SC1 to SC4 at each heating power of 350 W in section T1, which is the first sixty seconds, and after two seconds of pause section T2, driving is performed by the main heating coil MC at a heating power of 700 W and the adjacent or facing two sub-heating coils at each heating power of 350 W in section T3. In this pattern, a heated portion is moved from one side to the other side of the bottom of the target object N at specific time intervals, and the convection explained in Fig. 17 can be generated in the target object N.

In the tenth conduction pattern illustrated in Fig. 22, the case where the total sum of heating powers of the main heating coil MC and the sub-heating coils SC1 to SC4, that is, the "total sum of heating powers" is 1500 W (hereinafter, referred to as "boiling heating power 1") has been explained. However, in the control program of the conduction control circuit 200, "boiling heating power 2" and "boiling heating power 3" according to the magnitude of the total sum of heating powers are also provided as the tenth conduction pattern.

Regarding the relative magnitude relationship of heating powers, the "boiling heating power 1" is the smallest, and the "boiling heating power 3" is the largest. The total sum of heating powers of the "boiling heating power 1" is 1500 W, the total sum of heating powers of the "boiling heating power 2" is about 1800 W, and the total sum of heating powers of the "boiling heating power 3" is about 2000 W. For the "boiling heating power 1," the first section T1 is 60 seconds. Similarly, for the "boiling heating power 2" and the "boiling heating power 3," the first section T1 is each 60 seconds. In addition, each of the sections T3, T5, T7, and so on, in which the main heating coil and the sub-heating coils are driven at the same time is 20 seconds. For the "boiling heating power 2" and the "boiling heating power 3," each of the conduction pause periods T2, T4, T6, and so on is one second. Under such conduction time control, the main heating coil MC and the sub-heating coils SC1 to SC4 are controlled such that the total sum of heating powers for the "boiling heating power 2" is about 1800 W and the total sum of heating powers for the "boiling heating power 3" is about 2000 W. For the "boiling heating power 1" and each of the "boiling heating power 2" and the "boiling heating power 3", in each of the conduction sections T3, T5, T7, and so on, the heating power value of each of the main heating coil MC and the sub-heating coils SC1 to SC4 is different from that for the "boiling heating power 1".

Furthermore, in the case where four sub-heating coils SC1 to SC4 are driven, in any of the "boiling heating power 1" to the "boiling heating power 3," the heating power values are controlled to be the same by the conduction control circuit 200. That is, for the "boiling heating power 2" in which the total sum of heating powers is, for example, about 1800 W, in the case where the main/sub heating power ratio in a section is 1:2, the heating power of the main heating coil MC is about 600 W and the sum of the heating powers of the two sub-heating coils SC1 and SC2 is about 1200 W. In this case, each of the two sub-heating coils SC1 and SC2 is driven at about 600 W. For example, it is not controlled such that the sub-heating coil SC1 is driven at about 800 W and the sub-heating coil SC2 is driven at about 400 W.

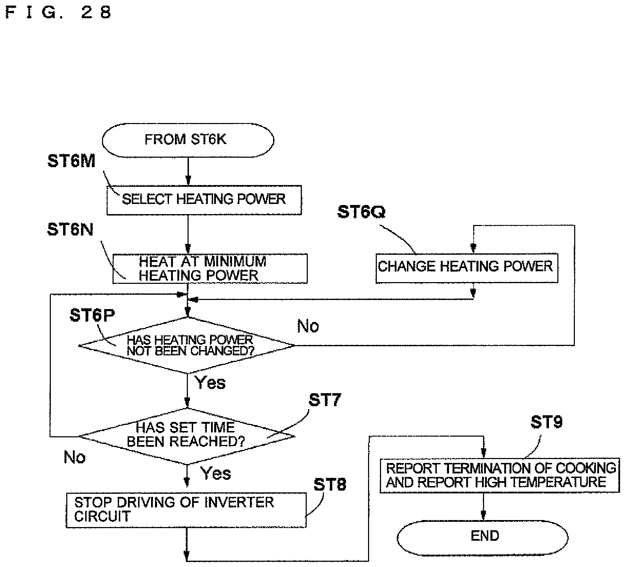

Next, the flowchart of a control operation in the "boiling mode" illustrated in Fig. 28 will be explained. When the boiling state is entered, even if the user does not select any of the "boiling heating power 1" to the "boiling heating power 3", in the case where the "boiling mode" is selected in the cooking menu selection step (ST6J) or step 6L, since the heating power is set to the "boiling heating power 1" as a default value, that is, set to a total sum of heating powers of 1500 W, the conduction pattern 10 illustrated in Fig. 22 is adopted. However, if a condition such as the amount of object to be cooked or the like changes, the "boiling heating power 2" or the "boiling heating power 3" may be selected in step (ST6J) or step 6L. Furthermore, the user is able to change the "boiling heating power 1" to the "boiling heating power 2" or the "boiling heating power 3."

Referring to the control operation flowchart illustrated in Fig. 28, normally, in the boiling mode, heating starts at the minimum heating power of 1500 W (ST6N). Then, it is always checked, at short time intervals (for example, shorter than several seconds), whether thirty minutes have passed after the boil (ST7). However, in the case where the user changes the heating power to a desired heating power, the step for checking whether or not heating power has been changed (ST6P) proceeds to a heating power change step (ST6Q). In the heating power change step (ST6Q), processing for changing into the heating power designated by the user is performed. Then, the heating operation continues to be performed at the changed heating power, and it is checked whether or not thirty minutes have passed since the boil (ST7). In the case where the set time (thirty minutes) have passed, the operations of the inverter circuits MIV and SIV stop, and the heating operation is terminated.

In the process of observing the state in which a boiling operation is performed at the boiling heating power 1, the user is always able to perform an operation for changing the heating power into the "boiling heating power 2" or the "boiling heating power 3". After setting to the "boiling heating power 2" or the "boiling heating power 3," the user is able to perform an operation for returning to the "boiling heating power 1." The user may change the heating power into the "boiling heating power 2" or the "boiling heating power 3" by considering that boiling over is not likely to occur while observing the motion of hot water and a material, such as "spaghetti", "udon", or "Chinese noodle", in the pot serving as the target object N. The user may also change the heating power into the "boiling heating power 1."

Next, in the cooking menu selection step (ST5), the case where the "preheating menu" is selected will be explained.

For example, for the case where stir-fry is performed using a large frying pan as a target object N, the preheating menu can be used.

In the case where the "preheating mode" is selected in order to select the preheating menu, the conduction control circuit 200 determines a conduction pattern in which the main heating coil MC and some or all of the sub-heating coils SC1 to SC4 are used. Display corresponding to the preheating mode is displayed on the display screen 100 (ST6Q). On the display screen 100, a display representing that it is essential to set a target temperature for execution of preheating cooking is presented using characters. Furthermore, a display representing that 180 degrees C, 200 degrees C, 240 degrees C, and the like can be selected as target temperatures is explicitly presented using characters at the same time. When the user selects one of target temperatures as a desired preheating temperature, the preheating operation starts (ST6R).

In the case where the user selects 240 degrees C as a preheating temperature, the conduction control circuit 200 selects, on the basis of the preheating temperature, 200 degrees C as the "first preheating temperature" and 3000 W as the "first heating power." Thus, the main/sub heating power ratio is automatically determined in such a manner that the total sum of heating powers of the main heating coil MC and the four sub-heating coils SC1 to SC4 is 3000 W, and for example, allocation of heating power is performed, for example, at a main/sub heating power ratio of 1:1, in which the main heating coil MC is heated at 1500 W and all the sub-heating coils is heated at 1500 W in total. In order to increase the preheating speed, basically, in this embodiment, heating up to the first temperature is rapidly performed at the maximum heating power. Relevant inverter circuits are controlled by the conduction control circuit 200 in such a manner that the directions of high-frequency currents in an area in which the main heating coil MC and the sub-heating coils SC1 to SC4 are adjacent to each other are made consistent with each other,.

The temperature of the bottom of the target object N such as a frying pan is monitored by the temperature sensing circuit 31, and it is always checked whether the first preheating temperature (200 degrees C) has been reached. In the case where it is determined that the first preheating has been reached (ST6S), the conduction control circuit 200 performs processing for automatically reducing the heating power from the first heating power (total sum of heating powers: 3000 W) to the second heating power (total sum of heating powers: 1000 W) (ST6T).

Then, heating continues to be performed to reach the second heating temperature, and it is always checked by the temperature sensing circuit 31 whether the temperature of the bottom of the target object N, such as a frying pan, has reached the second preheating temperature (240 degrees C). In the case where it is determined that the second preheating temperature has been reached (ST6U), the conduction control circuit 200 stops conduction of the second heating power (total sum of heating powers: 1000 W), and controlling for setting the conduction pattern determined in the conduction pattern determination step (ST6P) starts (ST6V). That is, the conduction control circuit 200 automatically performs increasing and decreasing of heating power while always referring to a temperature check result by the temperature sensing circuit 31 so that the temperature of the bottom of the target object N can keep the second preheating temperature.

Furthermore, in the case where the second preheating temperature has been reached, since preheating is completed, at any time the user is able to put the ingredients for cooking, such as meat, vegetables, and the like, into the frying pan, which is the target object N. However, since the case where the user does not put the ingredients for cooking into the target object N may occur, the heating operation is automatically stopped after thirty minutes, which is a specific time, have passed. Thus, measuring of time is started immediately after the genuine heating operation is started in accordance with the selected conduction pattern, that is, immediately after the second preheating temperature is reached (ST6W), and it is checked whether thirty minutes have passed (ST7). In the case where the set time (thirty minutes) has passed, the operations of the inverter circuits MIV and SIV stop, and the heating operation is terminated. In this embodiment, for the specific time checking operation in the boiling mode (ST7) and the specific time checking operation in the preheating mode (ST7), determination is made on the basis of thirty minutes. However, the time may differ between the two cooking modes.

As described above, the temperature sensing circuit 31 always checks for the temperature of the target object N using the five temperature sensors 31L1 to 31L5 in such a manner that the temperature of the bottom of the target object N such as a frying pan approaches the second preheating temperature (240 degrees C). In the case where the user puts a cold vegetable or meat, water, soup, or the like into the target object N, the temperature of the target object N suddenly decreases. Then, on the basis of information on the decrease in the temperature from the temperature sensing circuit 31, the conduction control circuit 200 performs control such that the heating performance of the main heating coil MC ad the sub-heating coils SC1 to SC4 is made maximum, and instantly changes the heating power to the maximum heating power (total sum of heating powers: 3000 W). Then, heating power control is automatically performed in such a manner that the total sum of heating powers gradually decreases as the temperature of the target object N approaches the specific temperature (240 degrees C). In contrast, in the case where the user changes a target temperature in a desired manner after the preheating completion temperature (240 degrees C) is reached, for example, in the case where the user performs an operation for decreasing the temperature to 230 degrees C or changes the total sum of heating power, it is checked whether or not the changing operation has been performed (ST6X). In the case where a change has been made, processing for changing to a different conduction program is performed in such a manner that the changed set value (heating power or temperature) can be approached (ST6Y).

An example of an operation in the case where the "first preheating temperature" is 200 degrees C, the "first heating power" is 3000 W, a target preheating temperature (second preheating temperature) is 240 degrees C has been explained above. In the case where the second preheating temperature is 240 degrees C, the "first preheating temperature" is not always 200 degrees C. In the case where the total sum of heating powers is, for example, 2500 W when preheating operation is started while emphasizing on the heating speed in such a manner that the total sum of heating powers of the main heating coil MC and the four sub-heating coils SC1 to SC4 is 3000 W, even if the same target object N is heated, since the curve of the increase in the temperature is gentle, a temperature much closer to the second preheating temperature, such as about 220 degrees C, may be set. Since the heating power value of each of the main heating coil MC and the sub-heating coils up to the first preheating temperature and the second preheating temperature, the total sum of heating power value determined on the basis of the heating power values vary according to the size of the main heating coil MC and the sub-heating coils, the size of a pot used, and the like, the optimal value can be determined by performing a plurality of heating temperature experiments.

### (Conclusion)

As is clear from the description provided above, an induction heating cooker according to a first invention includes the heating coil 6LC that induction-heats a target object N, the high-frequency electric power supplying means 210L for driving the heating coil, the conduction control circuit 200 that controls the high-frequency electric power supplying means and has at least a "water-boiling mode" and a "boiling mode" as a cooking mode that can be selected by a user, the temperature sensing circuit 31 that senses the temperature of the target object, and the operation means E (40L) for instructing the conduction control means to perform the cooking mode. The heating coil 6LC includes the ring-shaped main heating coil MC and the plurality of sub-heating coils SC1 to SC4 that are arranged around the main heating coil and that heat, in cooperation with the main heating coil, a target object having a diameter that is greater than the target object having a diameter that can be heated by the main heating coil. In the case where the target object N is heated in the "water-boiling mode," the conduction control circuit 200 is capable of automatically determining heating only by the main heating coil MC or heating by the main heating coil MC and the sub-heating coils SC1 to SC4 in cooperation with each other. In the case where the target object N is heated in the "boiling mode" by the main heating coil MC and the sub-heating coils SC1 to SC4 in cooperation with each other, the main heating coil MC and the sub-heating coils SC1 to SC4 are driven at the same time at a stage before the temperature sensing circuit 31 detects the state in which fluid in the target object N is boiling, and the main heating coil MC and the sub-heating coils SC1 to SC4 are driven at specific time intervals T1 to T11 at a stage after the temperature sensing circuit 31 detects the state in which the fluid in the target object N is boiling.

With this configuration, a convection of fluid or fluid containing a vegetable, meat, or the like in the vessel being heated such as a pot can be accelerated in the boiling mode, and occurrence of burning at the bottom of the pot can also be suppressed.

An induction heating cooker according to a second invention includes the heating coil 6LC that induction-heats a target object N, the high-frequency electric power supplying means 210L for driving the heating coil, the conduction control circuit 200 that controls the high-frequency electric power supplying means and has at least a "water-boiling mode" and a "boiling mode" as a cooking mode that can be selected by a user, the temperature sensing circuit 31 that senses the temperature of the target object, and the operation means E (40L) for instructing the conduction control means to perform the cooking mode. The heating coil 6LC includes the ring-shaped main heating coil MC and the plurality of sub-heating coils SC1 to SC4 that are arranged around the main heating coil MC and that heat, in cooperation with the main heating coil, a target object N having a diameter that is greater than the target object having a diameter that can be heated by the main heating coil. The sub-heating coils SC1 to SC4 face the outer circumferential edge of the main heating coil MC with the space 271 therebetween. The entire sub-heating coils SC1 to SC4 curve toward the main heating coil MC so as to be along the outer circumferential edge of the main heating coil MC. The sub-heating coils SC1 to SC4 have flat shapes and the consistency ratio of the curvatures is 60% or more. In the case where the target object N is heated in the "water-boiling mode," the conduction control circuit 200 is capable of automatically determining heating only by the main heating coil MC or heating by the main heating coil and the sub-heating coils SC1 to SC4 in cooperation with each other. Furthermore, in the case where the target object N is heated in the "boiling mode" by the main heating coil MC and the sub-heating coils SC1 to SC4 in cooperation with each other, the main heating coil MC and the sub-heating coils SC1 to SC4 are driven at the same time at a stage before the temperature sensing circuit 31 detects the state in which fluid in the target object N is boiling, and the main heating coil MC and the sub-heating coils SC1 to SC4 are driven at specific time intervals T1 to T11 at a stage after the temperature sensing circuit 31 detects the state in which the fluid in the target object is boiling.

With this configuration, a convection of fluid or fluid containing a vegetable, meat, or the like in the vessel being heated such as a pot can be accelerated in the boiling mode, and occurrence of burning at the bottom of the pot can also be suppressed. Furthermore, since the sub-heating coils SC1 to SC4 face the outer circumferential edge of the main heating coil MC with the specific space 271 therebetween, the entire sub-heating coils SC1 to SC4 curve toward the main heating coil MC so as to be along the outer circumferential edge of the main heating coil MC, and the sub-heating coils SC1 to SC4 have flat shapes and have a consistency ratio of the curvatures of 60% or more, a heating area by the sub-heating coils SC1 to SC4 is generated so as to surround the main heating coil MC, and the target object can be efficiently heated by the sub-heating coils SC1 to SC4 together with the main heating coil.

An induction heating cooker according to a third invention includes the ring-shaped main heating coil MC that induction-heats a target object, the plurality of sub-heating coils SC1 to SC4 that are arranged around the main heating coil and that heat, in cooperation with the main heating coil MC, a target object having a diameter that is greater than the target object having a diameter that can be heated by the main heating coil MC, high-frequency electric power supplying means for driving the main heating coil and the sub-heating coils SC1 to SC4, the conduction control circuit 200 that controls the high-frequency electric power supplying means 210L and that has at least a "water-boiling mode" and a "preheating mode" as a cooking mode that can be selected by a user, the temperature sensing circuit 31 that senses the temperature of the target object, and the operation means E (40L) for instructing the conduction control means to perform the cooking mode. In the case where induction heating is performed in the "water-boiling mode," the conduction control circuit 200 is capable of automatically determining heating only by the main heating coil MC or heating by the main heating coil and the sub-heating coils SC1 to SC4 in cooperation with each other. In the case where induction heating is performed in the "preheating mode" by the main heating coil MC and the sub-heating coils SC1 to SC4 in cooperation with each other, the conduction control circuit 200 drives the main heating coil and the sub-heating coils SC1 to SC4 at the same time at a specific first heating power (for example, 3000 W) at a stage before the temperature sensing circuit 31 detects that the temperature of the target object N is a first preheating temperature (for example, 200 degrees C), and drives the main heating coil MC and the sub-heating coils SC1 to SC4 at specific time intervals at a heating power that is smaller than or equal to a second heating power (for example, 1000 W), which is smaller than the first heating power, at a stage after the temperature sensing circuit 31 detects that the temperature of the target object N is a second preheating temperature (for example, 240 degrees C), which is higher than the first preheating temperature.

With this configuration, since heating can be performed at a large heating power until the first preheating temperature is reached, the preheating time can be shortened, and the preheating operation can be automated. Furthermore, after the second temperature is reached, in a preheating step after the second preheating temperature is reached, by driving the main heating coil and the plurality of sub-heating coils at specific time intervals at a specific main/sub heating power ratio, the entire target object from the center of the bottom to the outer circumferential edge of the target object can be evenly heated.

An induction heating cooker according to a fourth invention includes the ring-shaped main heating coil MC that induction-heats a target object N, the plurality of sub-heating coils SC1 to SC4 that are arranged around the main heating coil and that heat, in cooperation with the main heating coil, a target object having a diameter that is greater than the target object having a diameter that can be heated by the main heating coil, the high-frequency electric power supplying means 210L for driving the main heating coil MC and the sub-heating coils SC1 to SC4, the conduction control circuit 200 that controls the high-frequency electric power supplying means and that has at least a "water-boiling mode" and a "preheating mode" as a cooking mode that can be selected by a user, the temperature sensing circuit 31 that senses the temperature of the target object, and the operation means E (40L) for instructing the conduction control circuit 200 to perform the cooking mode. In the case where induction heating is performed in the "water-boiling mode," the conduction control circuit 200 is capable of automatically determining heating only by the main heating coil or heating by the main heating coil and the sub-heating coils SC1 to SC4 in cooperation with each other. Furthermore, in the case where induction heating is performed in the "preheating mode" by the main heating coil MC and the sub-heating coils SC1 to SC4 in cooperation with each other, the conduction control circuit 200 drives the main heating coil MC and the sub-heating coils at the same time at a specific first heating power (for example, 3000 W) at a stage before the temperature sensing circuit 31 detects that the temperature of the target object N is a first preheating temperature (for example, 200 degrees C), and drives the main heating coil MC and the sub-heating coils SC1 to SC4 at specific time intervals at a heating power that is smaller than or equal to a second heating power (for example, 1000 W), which is smaller than the first heating power, at a stage after the temperature sensing circuit 31 detects that the temperature of the target object is a second preheating temperature (for example, 240 degrees C), which is higher than the first preheating temperature. In the case where the temperature sensing circuit 31 detects that the temperature of the target object N has reached a temperature lower than or equal to the first preheating temperature at a stage after the second preheating temperature is detected, the conduction control circuit 200 recovers the second heating power from the first heating power and the second preheating temperature is rapidly recovered by heating by the main heating coil MC and the sub-heating coils SC1 to SC4 at a high heating power.

With this configuration, since heating can be performed at a large heating power until the first preheating temperature is reached, the preheating time can be shortened and the preheating operation can be automated. Furthermore, after the second temperature is reached, in a preheating step after the second preheating temperature is reached, by alternately driving the main heating coil and the plurality of sub-heating coils at specific time intervals or driving the main heating coil and the plurality of sub-heating coils at the same time at a specific main/sub heating power ratio, the entire target object from the center of the bottom to the outer circumferential edge of the target object can be evenly heated. Furthermore, in the case where the temperature of the target object suddenly decreases due to input of an ingredient such as a vegetable or meat, since the conduction control device recovers the second heating power from the first heating power and performs heating by the main heating coil and the sub-heating coils at a high heating power, a necessary heating power can be automatically maintained even when the preheating mode is used, and stir-fry or fry can be performed in an excellent manner.

Furthermore, operations of the conduction control circuit 200, the temperature sensing circuit 31, the object-to-be-heated placement determination unit 400, and the like explained in the foregoing embodiments can be implemented and provided in the form of a program that can be executed by an electronic apparatus or an information apparatus including a microcomputer and various semiconductor storage devices (ROM, RAM, etc.). Thus, these operations can be distributed in the form of a program via a recording medium or distributed using a communication line for the Internet. By operation such as distribution, updating, installation, or the like of new control functions described in the embodiments, provision of a cooker with an improved usability can be expected.

Furthermore, by providing temperature sensors near the main heating coil MC and the sub-heating coil SC1 or in spaces inside the main heating coil MC and the sub-heating coil SC1 so that the temperature of areas heated by the main heating coil and a sub-heating coil, for example, SC1 illustrated in Fig. 2 can be individually sensed and performing control described below, burning can further be prevented.
(A) In the case where the sub-heating coil SC1 is driven at a specific heating power, the temperature sensing circuit 31 senses the temperature of a portion of a pot placed above the sub-heating coil SC1 (the main heating coil MC may be driven at the same time).
(B) The tendency of an increase in temperature in the case where the main heating coil MC, the sub-heating coil SC1, and the like are driven, for example, the time required for increasing from 75 degrees C to 85 degrees C or the rate of temperature rise when a power of 1000 W is applied is compared with data (reference value 1) obtained in the case where water is heated in advance at 1000 W (the conduction control circuit 200 performs this comparison and determination processing).
(C) In the case where a time longer than the reference value 1 is required or the rate of temperature rise is smaller than the reference value 1, the conduction control circuit 200 determines that the viscosity of fluid being cooked (for example, curry) is high.
(D) After the determination is made, the conduction state for the main heating coil MC and the sub-heating coils is changed (for example, the total sum of heating powers of the main and sub-heating coils is set to 875 W at a first stage or 750 W or less at a second stage, or the conduction continuation time for the main and sub-heating coils is set to be shorter in order to reduce the amount of heating per unit time).
(E) In the case where, for example, a power of 750 W is applied by the processing of (D) and heating continues to be performed, the time required for increasing from 85 degrees C to 95 degrees C or the rate of temperature rise is compared with data (reference value 2) obtained in the case where water is heated in advance at 750 W (the conduction control circuit 200 performs this processing).
(F) In the case where the time is shorter than the reference value 2 or the rate of temperature rise is larger than the reference value 2, the conduction control circuit 200 determines that the viscosity of fluid being cooked (for example, curry) is low (for example, the viscosity of curry decreases in accordance with an increase in the temperature).
(G) In the case where it is determined in the processing of (F) that the viscosity is low, the convection acceleration control described above is performed. However, when it is determined that the viscosity is still high, processing for reducing the amount of heating per unit time (for example, ten seconds) for the target object N, such as adopting control for reducing the heating power for each period (section) or reducing the time width of each period.

As described above, applying an unnecessarily large heating power and continuing to perform heating can be prevented, and an effect of further suppressing the occurrence of burning can be expected.

It is desirable that, since a change in the temperature of the entire pot can be accurately obtained, temperature sensors are arranged in two or more separate positions (across the main heating coil MC) so that the temperature of an area heated by a pair of sub-heating coils across the main heating coil MC, for example, a pair of SC1 and SC4 or a pair of SC2 and SC3 in Fig. 2. Furthermore, it is desirable that temperature sensors of an infrared type and a thermal type such as a thermistor are used and advantages of the merits of both the types are taken.

### Industrial Applicability

An induction heating cooker according to the present invention performs induction heating using a combination of a main heating coil and a sub-heating coil and is capable of suppressing burning in boiling and the like. Thus, the induction heating cooker according to the present invention can be widely used as a cooker dedicated to an induction-heating heat source of a stationary type or a built-in type and an induction heating cooker of a complex type with a radiation heat source. Reference Signs List

A main unit, D heating means, E operation means, F control means, G display means, W width, CL1 lateral center line of main unit A, CL2 lateral center line of first induction heating unit, CL2 lateral center line of second induction heating unit, DB arrangement outer diameter of sub-heating coil, N target object N (pot), SC sub-heating coil (group), SC1 to SC4 sub-heating coil, MC main heating coil, MIV main inverter circuit, PW2 fourth heating power, PW3 third heating power, PW4 heating power, PW5 heating power, PW6 second heating power, PW7 first heating power, SIV1 to SIV4 sub-inverter circuit, T1 to T11 period (section), 21 top plate, 31 temperature sensing circuit, 100 display screen, 400 object-to-be-heated placement determination unit, X1 midpoint, X2 midpoint.

## Claims

1. An induction heating cooker comprising:
a heating coil that induction-heats a target object (N);
high-frequency electric power supplying means (210L) for driving the heating coil;
conduction control means (200) for controlling the high-frequency electric power supplying means (210L) and having at least a "water-boiling mode" and a "boiling mode" as a cooking mode that is selectable by a user;
temperature detection means (31) for detecting temperature of the target object (N); and
an operation unit (E) that instructs the conduction control means (200) to perform the cooking mode,
wherein the heating coil includes a ring-shaped main heating coil (MC) and a plurality of sub-heating coils (SC) that are arranged around the main heating coil (MC) and that heat, in cooperation with the main heating coil (MC), a target object (N) having a diameter that is greater than a target object (N) having a diameter that is capable of being heated by the main heating coil (MC),
wherein in a case where the target object (N) is heated in the "water-boiling mode", the conduction control means (200) is capable of automatically determining heating only by the main heating coil (MC) or heating by the main heating coil (MC) and the sub-heating coils (SC) in cooperation with each other, and
wherein in a case where the target object (N) is heated in the "boiling mode" by the main heating coil (MC) and the sub-heating coils (SC) in cooperation with each other, the conduction control means (200) drives the main heating coil (MC) and the sub-heating coils (SC) at the same time at a stage before the temperature detection means (31) detects that fluid in the target object (N) is in a boiling state, and drives the main heating coil (MC) and the sub-heating coils (SC) at specific time intervals at a stage after the temperature detection means (31) detects that the fluid in the target object (N) is in the boiling state.

2. The induction heating cooker according to claim 1 **characterized in that**:
the sub-heating coils (SC) face an outer circumferential edge of the main heating coil (MC) with a specific electrically insulated space therebetween, the entire sub-heating coils (SC) curve toward the main heating coil (MC) so as to be along the outer circumferential edge of the main heating coil (MC), each of the sub-heating coils (SC) has a flat shape, and a consistency ratio of curvatures is 60% or more,

3. The induction heating cooker of claim 1 or 2, wherein the sub-heating coils (SC) are at least two sub-heating coils (SC) that are arranged concentrically with the main heating coil (MC) with a specific space therebetween, each of the sub-heating coils (SC) has a flat shape, and width of the sub-heating coil (SC) in a radiation direction from a center of the main heating coil (MC) is 50% or less of diameter of the main heating coil (MC).

4. The induction heating cooker of claim 1 or 2, wherein each of the sub-heating coils (SC) faces an outer circumferential edge of the main heating coil (MC) with the specific electrically insulated space therebetween, each of the sub-heating coils (SC) has a flat shape, and the entire sub-heating coils (SC) curve toward the main heating coil (MC) so as to be along the outer circumferential edge of the main heating coil (MC).

5. The induction heating cooker of claim 1 or 2, wherein the high-frequency electric power supplying means (210L) for driving the heating coil includes an inverter circuit (MIV) for the main heating coil (MC) and inverter circuits (SIV) for the sub-heating coils (SC).

6. The induction heating cooker of claim 1 or 2,
wherein the number of sub-heating coils (SC) arranged is two or an even number equal to or greater than four, and
wherein the high-frequency electric power supplying means (210L) for driving the main heating coil (MC) and the sub-heating coils (SC) includes an inverter circuit (MIV) for the main heating coil (MC) and an inverter circuit (SIV) shared between two or more sub-heating coils (SC).

7. The induction heating cooker of claim 1 or 2,
wherein the temperature detection means (31) includes temperature detection units arranged in at least two positions,
wherein one of the at least two positions is in a space inside the main heating coil (MC), and
wherein another one of the at least two positions is in a space that is outside the main heating coil (MC) and that is inner than a range surrounded by a line connecting the outermost peripheral positions of all the sub-heating coils (SC).

8. The induction heating cooker of claim 1 or 2,
wherein the sub-heating coils (SC) are four sub-heating coils (SC) that are arranged around the ring-shaped main heating coil (MC) concentrically with the main heating coil (MC), specific intervals being provided between the sub-heating coils (SC), and
wherein the temperature detection means (31) includes temperature detection units arranged at four positions in a space inside the main heating coil (MC), and a temperature detection unit at each of the positions is arranged in a portion nearer adjacent sub-heating coils (SC) than a straight line connecting remote ends of the adjacent sub-heating coils (SC).

## Patentansprüche

1. Induktionsheizkochgerät, umfassend:
eine Heizspule, die ein Zielobjekt (N) per Induktion erwärmt;
Hochfrequenz-Elektroenergieversorgungsmittel (210L) zum Antreiben der Heizspule;
Leitungssteuermittel (200) zum Steuern der Hochfrequenz-Elektroenergieversorgungsmittel (210L) und aufweisend mindestens einen "Wassersiedemodus" und einen "Siedemodus" als Kochmodus, der von einem Benutzer wählbar ist;
Temperaturerfassungsmittel (31) zum Erfassen der Temperatur des Zielobjekts (N); und
eine Betriebseinheit (E), die die Leitungssteuermittel (200) anweist, den Kochmodus durchzuführen,
wobei die Heizspule eine ringförmige Hauptheizspule (MC) und eine Vielzahl von Unterheizspulen (SC) beinhaltet, die um die Hauptheizspule (MC) herum angeordnet sind und die, in Zusammenarbeit mit der Hauptheizspule (MC), ein Zielobjekt (N) mit einem Durchmesser erwärmen, der größer ist als ein Zielobjekt (N) mit einem Durchmesser, der geeignet ist, durch die Hauptheizspule (MC) erwärmt zu werden,
wobei in einem Fall, in dem das Zielobjekt (N) im "Wassersiedemodus" erwärmt wird, das Leitungssteuermittel (200) in der Lage ist, die Erwärmung nur durch die Hauptheizspule (MC) oder die Erwärmung durch die Hauptheizspule (MC) und die Unterheizspulen (SC) in Zusammenarbeit miteinander automatisch zu bestimmen, und
wobei in einem Fall, in dem das Zielobjekt (N) im "Siedemodus" durch die Hauptheizspule (MC) und die Unterheizspulen (SC) in Zusammenarbeit miteinander erwärmt wird, das Leitungssteuermittel (200) die Hauptheizspule (MC) und die Unterheizspulen (SC) gleichzeitig in einem Stadium, bevor das Temperaturerfassungsmittel (31) erfasst, dass sich das Fluid im Zielobjekt (N) in einem Siedezustand befindet, antreibt, und die Hauptheizspule (MC) und die Unterheizspulen (SC) in bestimmten Zeitabständen in einem Stadium, nachdem das Temperaturerfassungsmittel (31) erkannt hat, dass sich das Fluid im Zielobjekt (N) im Siedezustand befindet, antreibt.

2. Induktionsheizkochgerät nach Anspruch 1, **dadurch gekennzeichnet, dass**:
die Unterheizspulen (SC) einer äußeren Umfangskante der Hauptheizspule (MC) mit einem spezifischen elektrisch isolierten Raum dazwischen zugewandt sind, wobei sich die gesamten Unterheizspulen (SC) in Richtung der Hauptheizspule (MC) so krümmen, dass sie entlang der äußeren Umfangskante der Hauptheizspule (MC) verlaufen, jede der Unterheizspulen (SC) eine flache Form aufweist, und ein Konsistenzverhältnis der Krümmungen 60% oder mehr beträgt.

3. Induktionsheizkochgerät nach Anspruch 1 oder 2, wobei die Unterheizspulen (SC) mindestens zwei Unterheizspulen (SC) sind, die konzentrisch mit der Hauptheizspule (MC) mit einem spezifischen Raum dazwischen angeordnet sind, jede der Unterheizspulen (SC) eine flache Form aufweist, und die Breite der Unterheizspule (SC) in einer Strahlrichtung von der Mitte der Hauptheizspule (MC) aus 50 % oder weniger des Durchmessers der Hauptheizspule (MC) beträgt.

4. Induktionsheizkochgerät nach Anspruch 1 oder 2, wobei jede der Unterheizspulen (SC) einer äußeren Umfangskante der Hauptheizspule (MC) mit dem spezifischen elektrisch isolierten Raum dazwischen zugewandt ist, jede der Unterheizspulen (SC) eine flache Form aufweist, und sich die gesamten Unterheizspulen (SC) in Richtung der Hauptheizspule (MC) krümmen, um entlang der äußeren Umfangskante der Hauptheizspule (MC) zu verlaufen.

5. Induktionsheizkochgerät nach Anspruch 1 oder 2, wobei das Hochfrequenz-Elektroenergieversorgungsmittel (210L) zum Antreiben der Heizspule einen Wechselrichterschaltkreis (MIV) für die Hauptheizspule (MC) und Wechselrichterschaltkreise (SIV) für die Unterheizspulen (SC) umfasst.

6. Induktionsheizkochgerät nach Anspruch 1 oder 2,
wobei die Anzahl der angeordneten Unterheizspulen (SC) zwei oder eine gerade Zahl gleich oder größer als vier ist, und
wobei das Hochfrequenz-Elektroenergieversorgungsmittel (210L) zum Antreiben der Hauptheizspule (MC) und der Unterheizspulen (SC) einen Wechselrichterschaltkreis (MIV) für die Hauptheizspule (MC) und einen Wechselrichterschaltkreis (SIV) umfasst, der von zwei oder mehr Unterheizspulen (SC) gemeinsam genutzt wird.

7. Induktionsheizkochgerät nach Anspruch 1 oder 2,
wobei das Temperaturerfassungsmittel (31) Temperaturerfassungseinheiten umfasst, die an mindestens zwei Positionen angeordnet sind,
wobei sich eine der mindestens zwei Positionen in einem Raum in der Hauptheizspule (MC) befindet, und
wobei sich eine andere der mindestens zwei Positionen in einem Raum befindet, der außerhalb der Hauptheizspule (MC) ist und der weiter innen als ein Bereich ist, der von einer Leitung umgeben ist, die die äußersten Peripheriepositionen aller Unterheizspulen (SC) verbindet.

8. Induktionsheizkochgerät nach Anspruch 1 oder 2,
wobei die Unterheizspulen (SC) vier Unterheizspulen (SC) sind, die um die ringförmige Hauptheizspule (MC) konzentrisch zur Hauptheizspule (MC) angeordnet sind, wobei bestimmte Intervalle zwischen den Unterheizspulen (SC) vorgesehen sind, und
wobei das Temperaturerfassungsmittel (31) Temperaturerfassungseinheiten beinhaltet, die an vier Positionen in einem Raum innerhalb der Hauptheizspule (MC) angeordnet sind, und eine Temperaturerfassungseinheit an jeder der Positionen in einem Abschnitt angeordnet ist, der näher an benachbarten Unterheizspulen (SC) als eine gerade Linie ist, die entfernte Enden der benachbarten Unterheizspulen (SC) verbindet.

## Revendications

1. Cuisinière à chauffage par induction comprenant :
un serpentin de chauffage qui chauffe par induction un objet cible (N) ;
des moyens de fourniture d'une énergie électrique à haute fréquence (210L) destinés à commander le serpentin de chauffage ;
des moyens de commande de conduction (200) destinés à commander les moyens de fourniture d'une énergie électrique à haute fréquence (210L), et présentant au moins un « mode ébullition d'eau » et un « mode ébullition » en tant que mode de cuisson sélectionnable par un utilisateur ;
des moyens de détection de la température (31) destinés à détecter la température de l'objet cible (N) ; et
une unité opérationnelle (E) qui charge les moyens de commande de conduction (200) d'exécuter le mode de cuisson,
où le serpentin de chauffage comprend un serpentin de chauffage principal en forme d'anneau (MC), et une pluralité de serpentins de chauffage secondaires (SC) qui sont agencés autour du serpentin de chauffage principal (MC), et qui chauffent, en association avec le serpentin de chauffage principal (MC), un objet cible (N) présentant un diamètre qui est plus grand que celui d'un objet cible (N) présentant un diamètre qui lui permettrait d'être chauffé par le serpentin de chauffage principal (MC),
où, dans un cas où l'objet cible (N) est chauffé dans le « mode ébullition d'eau », les moyens de commande de conduction (200) peuvent déterminer automatiquement un chauffage seul par le serpentin de chauffage principal (MC), ou un chauffage par le serpentin de chauffage principal (MC) et par les serpentins de chauffage secondaires (SC) en association l'un avec les autres, et
où, dans un cas où l'objet cible (N) est chauffé dans le « mode ébullition » par le serpentin de chauffage principal (MC) et par les serpentins de chauffage secondaires (SC) en association l'un avec les autres, les moyens de commande de conduction (200) commandent le serpentin de chauffage principal (MC) et les serpentins de chauffage secondaires (SC) en même temps à un stade avant que les moyens de détection de la température (31) n'aient détecté que le fluide dans l'objet cible (N) se trouvait dans un état d'ébullition, et commandent le serpentin de chauffage principal (MC) et les serpentins de chauffage secondaires (SC) selon des intervalles de temps spécifiques à un stade après que les moyens de détection de la température (31) aient détecté que le fluide dans l'objet cible (N) se trouvait dans l'état d'ébullition.

2. Cuisinière à chauffage par induction selon la revendication 1, **caractérisée en ce que** :
les serpentins de chauffage secondaires (SC) font face à un bord circonférentiel extérieur du serpentin de chauffage principal (MC) avec un espace isolé électriquement spécifique entre eux, tous les serpentins de chauffage secondaires (SC) sont incurvés vers le serpentin de chauffage principal (MC) afin de se situer le long du bord circonférentiel extérieur du serpentin de chauffage principal (MC), chacun des serpentins de chauffage secondaires (SC) présente une forme plate, et le taux de cohérence des courbures est égal ou supérieur à 60 %.

3. Cuisinière à chauffage par induction selon la revendication 1 ou 2, où les serpentins de chauffage secondaires (SC) sont au moins au nombre de deux serpentins de chauffage secondaires (SC) qui sont agencés concentrique avec le serpentin de chauffage principal (MC) avec un espace spécifique entre eux, chacun des serpentins de chauffage secondaires (SC) présente une forme plate, et la largeur d'un serpentin de chauffage secondaire (SC) dans une direction de rayonnement à partir du centre du serpentin de chauffage principal (MC), est égale ou inférieure à 50 % de celle du serpentin de chauffage principal (MC).

4. Cuisinière à chauffage par induction selon la revendication 1 ou 2, où chacun des serpentins de chauffage secondaires (SC) fait face à un bord circonférentiel extérieur du serpentin de chauffage principal (MC) avec l'espace isolé électriquement spécifique entre eux, chacun des serpentins de chauffage secondaires (SC) présente une forme plate, et tous les serpentins de chauffage secondaires (SC) sont incurvés vers le serpentin de chauffage principal (MC) afin de se situer le long du bord circonférentiel extérieur du serpentin de chauffage principal (MC).

5. Cuisinière à chauffage par induction selon la revendication 1 ou 2, où les moyens de fourniture d'une énergie électrique à haute fréquence (210L) destinés à commander le serpentin de chauffage, comprennent un circuit onduleur (MIV) pour le serpentin de chauffage principal (MC) et des circuits onduleurs (SIV) pour les serpentins de chauffage secondaires (SC).

6. Cuisinière à chauffage par induction selon la revendication 1 ou 2,
où le nombre de serpentins de chauffage secondaires (SC) agencés est égal à deux, ou est un nombre pair égal ou supérieur à quatre, et
où les moyens de fourniture d'une énergie électrique à haute fréquence (210L) destinés à commander le serpentin de chauffage principal (MC) et les serpentins de chauffage secondaires (SC), comprennent un circuit onduleur (MIV) pour le serpentin de chauffage principal (MC), et un circuit onduleur (SIV) partagé entre deux serpentins de chauffage secondaires (SC) ou plus.

7. Cuisinière à chauffage par induction selon la revendication 1 ou 2,
où le moyen de détection de la température (31) comprend des unités de détection de la température agencés à deux positions au moins,
où l'une des deux positions au moins, se situe dans un espace à l'intérieur du serpentin de chauffage principal (MC), et
où une autre des deux positions au moins se situe dans un espace qui est en dehors du serpentin de chauffage principal (MC), et qui est à l'intérieur d'une zone entourée par une ligne connectant les positions périphériques les plus extérieures de tous les serpentins de chauffage secondaires (SC).

8. Cuisinière à chauffage par induction selon la revendication 1 ou 2,
où les serpentins de chauffage secondaires (SC) sont au nombre de quatre serpentins de chauffage secondaires (SC) qui sont agencés autour du serpentin de chauffage principal en forme d'anneau (MC), concentriques avec le serpentin de chauffage principal (MC), des intervalles spécifiques étant prévus entre les serpentins de chauffage secondaires (SC), et
où les moyens de détection de la température (31) comprennent des unités de détection de la température agencées à quatre positions dans un espace à l'intérieur du serpentin de chauffage principal (MC), et une unité de détection de la température à chacune des positions, est agencée dans une partie adjacente aux serpentins de chauffage secondaires (SC) plus proche qu'une ligne droite connectant les extrémités distantes des serpentins de chauffage secondaires (SC).
